# EUROPÄISCHE PATENTSCHRIFT

(11) **EP 3 961 287 B1**
(45) Veröffentlichungstag und Bekanntmachung des Hinweises auf die Patenterteilung: **12.02.2025**
(21) Anmeldenummer: 21193949.1
(22) Anmeldetag: 31.08.2021
(51) Int. Cl.: G02B 21/24, G02B 21/08, G02B 21/36

(54) **AUTOFOKUSSYSTEM FÜR EINE OPTISCHE MESS- ODER MIKROSKOPIEVORRICHTUNG, VERFAHREN ZUR FOKUSEINSTELLUNG BEI EINER OPTISCHEN MESS- ODER MIKROSKOPIEVORRICHTUNG SOWIE OPTISCHE MESS- ODER MIKROSKOPIEVORRICHTUNG**
AUTOFOCUS SYSTEM FOR AN OPTICAL MEASURING OR MICROSCOPY APPARATUS, METHOD FOR FOCUS ADJUSTMENT IN AN OPTICAL MEASURING OR MICROSCOPY APPARATUS AND OPTICAL MEASURING OR MICROSCOPY APPARATUS
SYSTÈME DE MISE AU POINT AUTOMATIQUE POUR UN DISPOSITIF OPTIQUE DE MESURE OU DE MICROSCOPIE, PROCÉDÉ DE RÉGLAGE DE LA MISE AU POINT DANS UN DISPOSITIF OPTIQUE DE MESURE OU DE MICROSCOPIE, AINSI QUE DISPOSITIF OPTIQUE DE MESURE OU DE MICROSCOPIE

(30) Priorität: 01.09.2020 DE 102020122856
(43) Veröffentlichungstag der Anmeldung: 02.03.2022
(73) Patentinhaber: BMG Labtech GmbH, 77799 Ortenberg (DE)
(72) Erfinder: Adelhelm, Ralf, Dr., 77654 Offenburg (DE); Rager, Stefan, 77749 Hohberg (DE); Schneider, Mario, Dr., 77728 Oppenau (DE)
(74) Vertreter: LBP Lemcke, Brommer & Partner Patentanwälte mbB

(56) Entgegenhaltungen:
- WO-A1-2016/005571
- WO-A1-2017/099100
- WO-A1-2019/011581
- DE-A1- 102011 003 807
- US-A- 5 932 872
- US-A1- 2004 113 043
- US-A1- 2011 317 260
- US-A1- 2014 030 737

## Beschreibung

Die vorliegende Erfindung betrifft ein Autofokussystem für eine optische Mess- oder Mikroskopievorrichtung, insbesondere ein Mikroskop oder ein Mikroplatten-Lesegerät, bei dem zur Fokuseinstellung ein Abstand zwischen einer optischen Abbildungseinheit der optischen Mess- oder Mikroskopievorrichtung, insbesondere einem Objektiv, und einem Objektträger einstellbar ist. Ein solches Autofokussystem umfasst eine Autofokuslichtquelle und einen in zumindest einer Richtung ortsauflösenden Intensitätsdetektor. Die Autofokuslichtquelle erzeugt einen Autofokuslichtstrahl, der derart in den Strahlengang der optischen Mess- oder Mikroskopievorrichtung eingekoppelt ist, dass der Autofokuslichtstrahl durch die optische Abbildungseinheit auf den Objektträger fällt und dort einen Lichtfleck erzeugt. Der Intensitätsdetektor des Autofokussystems ist derart angeordnet, dass auf diesen ein von dem Objektträger reflektierter und in Rückrichtung aus dem Strahlengang der optischen Mess- oder Mikroskopievorrichtung ausgekoppelter Lichtanteil des Autofokuslichtstrahls trifft und dort ein reflektiertes Lichtmuster erzeugt. Des Weiteren weist das Autofokussystem eine mit dem Intensitätsdetektor verbundene Auswerteeinheit auf, die einen Autofokuswert aus einer Verschiebung des reflektierten Lichtmusters gegenüber einem mittels einer Referenzmessung ermittelten Referenzmuster erzeugt, wobei der Autofokuswert als Steuersignal zur Fokuseinstellung dient. Weiterhin betrifft die vorliegende Erfindung ein Verfahren zur Fokuseinstellung bei einer optischen Mess- oder Mikroskopievorrichtung nach Anspruch 18 sowie ein optisches Mess- und Mikroskopieystem nach Anspruch 19.

Bei einer mikroskopischen Langzeitmessung, bei der eine Vielzahl einzelner Mikroskopieaufnahmen in definierten Zeitabständen von einer oder mehreren Proben auf dem Objektträger aufgenommen werden, kann es aufgrund von thermischen Einflüssen oder Unebenheiten des Objektträgers zu einer Fokusänderung (Fokusdrift) kommen. Bei dieser Fokusänderung kann sich der Abstand zwischen der optischen Abbildungseinheit des Mikroskops und dem Objektträger im Verlauf der Langzeitmessung verändern, wodurch sich eine Bildschärfe der Mikroskopieaufnahmen verändert und eine anschließende Bildbearbeitung und - auswertung erschwert oder gar nicht mehr durchführbar ist.

Als Objektträger kann beispielsweise eine Mikroplatte mit 96 üblicherweise als Wells bezeichnete "Näpfchen" bzw. Kavitäten (96-well microplate) verwendet werden. Bei einem Well handelt es sich um eine Probenvertiefung in der Mikroplatte, in die die Probe eingebracht wird. Ein der optischen Abbildungseinheit zugewandter Boden der Mikroplatte kann eine produktionsbedingte Unebenheit aufweisen, die insbesondere auch benachbarte Wells betrifft. Werden bei der Langzeitmessung Mikroskopieaufnahmen von Proben in unterschiedlichen Wells aufgenommen, so kann eine erneute Fokuseinstellung beim Wechsel von einem ersten zu einem zweiten Well erforderlich sein, um für das zweite Well eine Mikroskopieaufnahme mit hoher Bildschärfe zu erhalten. Um eine wiederkehrende und auch zeitintensive Fokuseinstellung während dieser Langzeitmessung händisch durch den Mikroskopbenutzer zu vermeiden und dadurch die maximal mögliche Anzahl an Mikroskopieaufnahmen pro Zeiteinheit zu erhöhen, sind aus dem Stand der Technik Autofokussysteme bekannt, bei denen die Fokuseinstellung des Mikroskops automatisch und im Wesentlichen ohne Beteiligung des Benutzers durchführbar ist.

Unter dem Begriff "Fokuseinstellung" bzw. "Fokussierung" wird allgemein die Einstellung des Abstands zwischen der optischen Abbildungseinheit und dem Objektträger oder zwischen der optischen Abbildungseinheit und einer auf dem Objektträger aufgebrachten Probe verstanden, um eine Bildschärfe der Mikroskopieaufnahme zu verbessern. Der Abstand wird derart gewählt, dass die Mikroskopieaufnahme des zu untersuchenden Bereichs der Probe eine hohe Bildschärfe aufweist oder dieser Probenbereich bei der Betrachtung durch ein Mikroskopokular deutlich erkennbar ist. Die Methoden zur automatischen Fokuseinstellung, im nachfolgenden auch Autofokussierung genannt, lassen sich in zwei Kategorien einteilen: Eine Hardware-basierte und eine Bild-basierte Autofokussierung.

Bei der Bild-basierten Autofokussierung werden mit einer Mikroskopkamera Mikroskopieaufnahmen bei unterschiedlichen Abständen zwischen dem Objektträger und dem optischen Abbildungssystem aufgenommen. Mit einer Auswerteeinheit des Mikroskops wird jede Mikroskopieaufnahme bearbeitet und ausgewertet, um die Mikroskopieaufnahme mit der höchsten Bildschärfe zu ermitteln und daraus den korrespondierenden Abstand zwischen dem Objektträger und der optischen Abbildungseinheit zu bestimmen. Die Bild-basierte Autofokussierung hat den Nachteil, dass jede einzelne Mikroskopieaufnahme von der Auswerteeinheit zunächst bearbeitet und dann ausgewertet werden muss. Diese Bildverarbeitung und -Auswertung ist zeitintensiv. Ist zwischen jeder einzelnen Mikroskopieaufnahme der mikroskopischen Langzeitmessung eine Autofokussierung erforderlich, um die Fokusveränderung zu korrigieren, dann beschränkt die zeitintensive Bild-basierte Autofokussierung die maximal mögliche Anzahl an Mikroskopieaufnahmen pro Zeiteinheit. Für die mikroskopische Langzeitmessung von fluoreszenten, biologischen Proben werden hohe Bestrahlungsstärken benötigt. Eine wiederkehrende, Bild-basierte Autofokussierung zwischen jeder Mikroskopieaufnahme der Probe führt zu einem unerwünschten, vorzeitigen Bleichen eines empfindlichen Fluoreszenzfarbstoffes der biologischen Probe, wodurch die maximale Dauer der mikroskopischen Langzeitmessung eingeschränkt ist.

In der US 2017/0199367 A1 wird ein hardware-basiertes Autofokussierung beschriebenen, welches auf dem Prinzip der through-the-lens (TTL) Triangulation basiert. Hierbei wird ein in Richtung des Objektträgers geleiteter Autofokuslichtstrahl senkrecht zur optischen Achse teilweise ausgeblendet, sodass der Autofokuslichtstrahl auf dem Objektträger einen halbkreisförmigen Lichtfleck erzeugt. An Grenzflächen mit abweichendem Brechungsindex wird der Autofokuslichtstrahl reflektiert und in Rückrichtung aus dem Lichtweg des Mikroskops ausgekoppelt und zu einem Photodetektor geleitet. Die Größe und Position des auf den Photodetektor auftreffenden reflektierten Lichtmusters ist abhängig vom Abstand zwischen der optischen Abbildungseinheit und dem Objektträger und damit von der Fokuseinstellung. Durch Messung der Richtung und des Betrags der Verschiebung des reflektierten Lichtmusters von einer vorbekannten Referenzposition kann die Abweichung der Fokuseinstellung bestimmt werden. Hierzu wird der Schwerpunkt ("center of mass") des reflektierten Lichtmusters ermittelt und mit der Referenzposition verglichen. Dieses Maß steht in linearem Zusammenhang zu der Fokuseinstellung, sodass aufgrund der so ermittelten Verschiebung eine schnelle Korrektur in nur einem Schritt durchgeführt werden kann. Nachteilig hierbei ist, dass aufgrund der Reduktion des Lichtmusters auf nur einen einzigen Punkt, Artefakte wie Kratzer, Verunreinigungen etc. am Objektträger das Messergebnis verfälschen können.

Die US2011/0317260 A1 offenbart eine triangulierende Autofokuseinrichtung für ein Mikroskop mit einer Autofokus-Aperturblende mit mindestens einer Blendenöffnung zur Erzeugung eines Autofokus-Messstrahls und mit einer Autofokussieroptik zur Erzeugung eines Messmusters auf einem Objekt mittels des Autofokus-Messstrahls, wobei eine Blendenöffnung der Autofokus-Aperturblende dezentriert im Abstand zur optischen Achse der Autofokuseinrichtung angeordnet ist zur Erzeugung eines dezentrierten Autofokus-Messstrahls.

Es ist daher eine Aufgabe der vorliegenden Erfindung, ein Autofokussystem und ein Verfahren zur Autofokuseinstellung für eine optische Mess- oder Mikroskopievorrichtung anzugeben, bei dem die Genauigkeit und Zuverlässigkeit der Fokuseinstellung verbessert ist. Eine weitere Aufgabe liegt darin, ein Autofokussystem und ein Verfahren zur Autofokuseinstellung für eine optische Mess- oder Mikroskopievorrichtung bereitzustellen, mit dem eine verbesserte Fokuseinstellung auch für unterschiedliche optische Mess- und Mikroskopie-Methoden ermöglicht wird, wie etwa : Lumineszenz-, Fluoreszenz- und Absorptionsmessungen. Weiterhin ist es die Aufgabe der vorliegenden Erfindung, ein optisches Messsystem bereitzustellen, bei dem die Aufnahme von Mikroskopieaufnahmen und Messungen mit einem Mikroplatten-Lesegerät vereinfacht durchführbar sind.

Die Aufgabe wird gelöst durch ein Autofokussystem mit den Merkmalen des Anspruchs 1, ein Verfahren mit den Merkmalen des Anspruchs 18 und eine optische Mess- oder Mikroskopievorrichtung mit den Merkmalen des Anspruchs 19. Vorteilhafte Ausgestaltungen sind den abhängigen Ansprüchen zu entnehmen.

Die vorliegende Erfindung betrifft ein Autofokussystem für eine optische Mess- oder Mikroskopievorrichtung, insbesondere ein Mikroskop oder eine Mikroplatten-Lesegerät, bei dem zur Fokuseinstellung ein Abstand zwischen einer optischen Abbildungseinheit der optischen Mess- oder Mikroskopievorrichtung, insbesondere einem Objektiv, und einem Objektträger einstellbar ist. Die optische Abbildungseinheit dient dazu, eine optische Abbildung von einer Probe auf dem Objektträger oder von dem Objektträger selbst zu erzeugen. In einfachster Bauweise kann die optische Abbildungseinheit als einzelne Sammellinse oder Parabolspiegel ausgebildet sein. Bei der optischen Abbildungseinheit kann es sich jedoch auch um ein Objektiv handeln, dass mehrere Linsen, Spiegel oder weitere optische Bauteile umfasst. Das Autofokussystem umfasst eine Autofokuslichtquelle und einen in zumindest einer Richtung ortsauflösenden Intensitätsdetektor.

Unter dem Begriff "Autofokuslichtquelle" ist eine von einer Messlichtquelle des optischen Messsystems separate Strahlungsquelle zur Erzeugung des Autofokuslichtstrahls zu verstehen. Diese kann insbesondere eine Leuchtdiode (LED), ein Laser, eine Quecksilberdampflampe, eine Halogenmetalldampflampe, eine Xenon-Gasentladungslampe oder dergleichen sein. Diese Autofokuslichtquelle erzeugt einen Autofokuslichtstrahl, der derart in den Strahlengang der optischen Mess- oder Mikroskopievorrichtung eingekoppelt ist, dass der Autofokuslichtstrahl durch die optische Abbildungseinheit auf den Objektträger fällt und dort ein Lichtfleck erzeugt.

Der auf den Objektträger auftreffende Autofokuslichtstrahl wird an zumindest einer Grenzfläche des Objektträgers mit abweichendem Brechungsindex reflektiert. Wird als Objektträger beispielweise eine Mikroplatte aus Kunststoff verwendet, in der sich die Probe in einem wässrigem Medium befindet, so wird ein erster Teil des Autofokuslichtstrahls an der einer der optischen Abbildungseinheit zugewandten Seite der Mikroplatte vorhandenen Luft/Kunststoff-Grenzfläche, ein zweiter Teil an der einer der optischen Abbildungseinheit abgewandten Seite der Mikroplatte der Mikroplatte vorhandenen Kunststoff/Medium-Grenzfläche und ein dritter Teil an der darüberliegenden Medium/Proben Grenzfläche reflektiert, wobei letzterer unter der Nachweisgrenze liegen kann. Weitere Teile des Autofokuslichtstrahls werden innerhalb der Materialien reflektiert, wobei die Reflexion im Boden einen erheblichen Anteil ausmachen kann.

Der Intensitätsdetektor ist derart angeordnet, dass auf diesen ein von dem Objektträger reflektierter und in Rückrichtung aus dem Strahlengang des optischen Messsystems ausgekoppelter Lichtanteil des Autofokuslichtstrahls trifft und dort ein reflektiertes Lichtmuster erzeugt. Die Position des reflektierten Lichtmusters auf dem Intensitätsdetektor ist abhängig von einem Abstand zwischen der optischen Abbildungseinheit und dem Objektträger und damit von der Fokuseinstellung. Weicht der Abstand zwischen der optischen Abbildungseinheit und dem Objektträger von einer Brennweite der optischen Abbildungseinheit ab, sodass der Fokuspunkt der optischen Abbildungseinheit über oder unter den reflektierenden Grenzflächen liegt, dann kommt es zu einer Veränderung und insbesondere einer Verschiebung des reflektierten Lichtmusters auf dem Intensitätsdetektor gegenüber einem mittels einer Referenzmessung ermittelten Referenzmusters.

Das von dem Intensitätsdetektor aufgrund des reflektierten Lichtmusters detektierte Intensitätsprofil oder das Referenzintensitätsprofil weisen ein oder mehrere Peaks bzw. lokale Maxima auf, wobei die Anzahl der Peaks im Wesentlichen abhängig von der Anzahl an reflektierenden Grenzflächen im Bereich des Objektträgers und der Probe ist. Ein lokales Maximum kann z.B. von einer Reflektion an der zuvor genannten Luft/Kunststoff-Grenzfläche der Mikroplatte resultieren. Die Verschiebung des reflektierten Lichtmusters auf dem Intensitätsdetektor resultiert vor allem in einer Verschiebung des von dem Intensitätsdetektor aufgrund des reflektierten Lichtmusters detektierten Intensitätsprofils gegenüber dem im Rahmen der Referenzmessung detektierten Referenz-Intensitätsprofil, wobei die Form der Intensitätsprofile sich bei vielen Objektträger-Materialien nur wenig verändert. Bei der Referenzmessung wird der Abstand zwischen der optischen Abbildungseinheit und dem Objektträger, die sogenannte Z-Position, derart gewählt, dass eine oder mehrere Bildqualitätseigenschaften von Bildteilen oder Bildobjekten optimal ist. Abhängig von der Mikroskopie-Methode kann die Z-Einstellung für die Referenzmessung so gewählt werden, dass sich in der betrachteten Ebene der Probe eine optimale Bildschärfe, ein optimaler Kontrast oder eine andere besondere Bildeigenschaft ergibt. Das reflektierte Lichtmuster enthält aufgrund seiner Position auf dem Intensitätsdetektor - im Gegensatz zu dem auf den Objektträger auftreffenden Lichtfleck - unter anderem Informationen über den Abstand zwischen der optischen Abbildungseinheit und dem Objektträger.

Des Weiteren weist das Autofokussystem eine mit dem Intensitätsdetektor verbundene Auswerteeinheit auf, die einen Autofokuswert aus der Verschiebung des reflektierten Lichtmusters gegenüber dem Referenzmuster erzeugt. Hierzu ermittelt die Auswerteeinheit als Autofokuswert eine rechnerische Verschiebung zwischen dem von dem Intensitätsdetektor aufgrund des reflektierten Lichtmusters detektierten Intensitätsprofil und dem im Rahmen der Referenzmessung detektierten Referenz-Intensitätsprofil, bei der ein über mindestens einen Bereich des Intensitätsdetektors summiertes Abweichungsmaß der beiden Intensitätsprofile voneinander minimal ist. Unter dem Begriff "rechnerische Verschiebung" ist zu verstehen, dass das von dem Intensitätsdetektor aufgrund des reflektierten Lichtmusters detektierte Intensitätsprofil gegenüber dem Referenzintensitätsprofil oder das Referenzintensitätsprofil gegenüber dem von dem Intensitätsdetektor aufgrund des reflektierten Lichtmusters detektierten Intensitätsprofil rechnerisch verschoben wird.

Es liegt im Rahmen der Erfindung, dass das Autofokussystem entweder in die optische Mess- oder Mikroskopievorrichtung bzw. in deren Gehäuse integriert ist oder als separate Einheit mit der optischen Mess- oder Mikroskopievorrichtung verbunden ist. Im letztgenannten Fall können bereits vorhandene optische Mess- oder Mikroskopievorrichtungen mit diesem Autofokussystem nachgerüstet werden.

Beispielsweise kann das Autofokussystem in ein Mikroplatten-Lesegerät integriert oder als separates Bauteil mit dem Mikroplatten-Lesegerät verbunden sein. Ein Mikroplatten-Lesegerät dient insbesondere zur Messung von Lumineszenz, Fluoreszenz und Absorption optischer Strahlung von biologischen und chemischen Proben. Ein solches Mikroplatten-Lesegerät besitzt mindestens einen Strahlengang und typischerweise Strahlungssaufnahmen (einstellbare Optiken) unter- und oberhalb der Probe und deren Träger, welche die optische Strahlung zur und von der Probe fokussieren und deren Präzision sich mit dem erfindungsgemäßen Autofokussystem verbessern lässt. Die Fokus- bzw. Z-Positionseinstellung, d.h. die Einstellung des Abstands zwischen der optischen Abbildungseinheit und dem Objektträger des Mikroplatten-Lesegeräts kann z.B. eine zeitlich Fokusänderung aufgrund von Änderungen des Volumens, der Oberflächenspannung und Verdunstung des wässrigen Mediums in dem Well der verwendeten Mikroplatte, in denen sich die zu untersuchende Probe befindet, und deren Einfluss auf die Qualität der Messergebnisse ausgleichen. Infolgedessen ermöglicht die Fokuseinstellung, dass ein hohes Probensignal und Signal-Rausch-Verhältnis bei einer nachfolgenden Messung mit dem Mikroplatten-Lesegerät erreicht wird.

Ein weiterer Aspekt der Erfindung sieht ein Verfahren zur Fokuseinstellung bei einem optischen Mess- oder Mikroskopiesystem vor, dass mit dem zuvor beschriebenen Autofokussystem oder einem seiner nachfolgend beschriebenen vorteilhaften Ausgestaltungen durchführbar ist. Bei diesem Verfahren wird ein Autofokuslichtstrahl einer Autofokuslichtquelle in einen Strahlengang des optischen Messsystems eingekoppelt und in Richtung eines Objektträgers geleitet, wobei der eingekoppelte Autofokuslichtstrahl einen Lichtfleck auf dem Objektträger erzeugt und an zumindest einer reflektierenden Grenzfläche des Objektträgers und ggf. weiteren Schichten reflektiert wird. Ein Lichtanteil des reflektierten Autofokuslichtstrahls wird in Rückrichtung aus dem Strahlengang des optischen Messsystems ausgekoppelt und in Richtung eines in zumindest einer Richtung ortsauflösenden Intensitätsdetektors geleitet, wodurch an dem Intensitätsdetektor ein reflektiertes Lichtmuster erzeugt wird. Ein Autofokuswert wird durch eine rechnerische Verschiebung eines von dem Intensitätsdetektor aufgrund des reflektierten Lichtmusters detektierten Intensitätsprofils gegenüber einem im Rahmen einer Referenzmessung detektierten Referenz-Intensitätsprofils ermittelt, bei welcher Verschiebung ein über mindestens einen Bereich des Intensitätsdetektors summiertes Abweichungsmaß der beiden Intensitätsprofile voneinander minimal ist. Eine darauffolgende Fokuseinstellung wird mittels des als Steuersignal dienenden Autofokuswertes durchgeführt.

Die erfindungsgemäße Bestimmung des Autofokuswerts mit dem Autofokussystem sowie dem Verfahren hat den Vorteil, dass in dem von dem Intensitätsdetektor aufgrund des reflektierten Lichtmusters detektierten Intensitätsprofil keine Maxima bestimmt werden müssen, wodurch störende Verunreinigungen und sonstige Artefakte aus der Probe oder dem Objektträger die Fokuseinstellung nicht verfälschen und dadurch eine erhöhte Genauigkeit bei der Autofokuseinstellung erreicht werden kann. Außerdem werden auch keine hohen Bestrahlungsstärken der Autofokuslichtquelle benötigt.

Bei einer ersten vorteilhaften Ausgestaltung des erfindungsgemäßen Autofokussystems ist die Auswerteeinheit dazu ausgebildet, eine mathematische Distanzfunktion zwischen dem detektierten Intensitätsprofil und dem Referenz-Intensitätsprofil in Abhängigkeit der rechnerischen Verschiebung der beiden Intensitätsprofile gegeneinander zu berechnen. Der Autofokuswert wird von der Auswerteeinheit als die rechnerische Verschiebung ermittelt, bei der die Distanzfunktion ein Minimum aufweist. Die Distanzfunktion wird hierbei als das über zumindest einen Bereich der Detektorfläche summierte Abweichungsmaß der beiden Intensitätsprofile voneinander bei unterschiedlicher rechnerischer Verschiebung der Intensitätsprofile gegeneinander berechnet. Die Auswerteeinheit ist insbesondere dazu ausgebildet, das Abweichungsmaß E als eine mathematische Minkowski-Distanz, insbesondere eine Euklidische Distanz zwischen korrespondierenden Intensitätswerten eines ersten Intensitätsprofils und eines Referenz-Intensitätsprofils anhand der folgenden Formel (I) 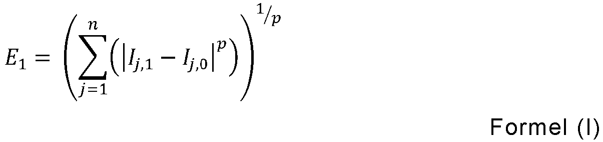 zu bilden, wobei n der obere Summationsindex (maximal die Anzahl der Pixel), j der untere Summationsindex, Iⱼ der Intensitätswert des Pixels j des Intensitätsdetektors aufgrund des reflektierten Lichtmusters detektierten Intensitätsprofils I₁, I_{j,0} der Intensitätswert des Pixels j des Referenz-Intensitätsprofils I₀. Der Exponent p ist eine reelle Zahl p ≥ 1 und ist im Fall der Euklidischen Distanz zu p = 2 gewählt.

Um die Genauigkeit der Fokuseinstellung weiter zu verbessern, sieht eine weitere vorteilhafte Ausgestaltung des erfindungsgemäßen Autofokussystems vor, dass die Auswerteeinheit ausgebildet ist, die einzelnen Summanden des summierten Abweichungsmaßes mit einer Gewichtungsfunktion zu multiplizieren. Mittels der Gewichtungsfunktion werden vorzugsweise solche Summanden stärker gewichtet, die näher an einer Verschiebung liegen, die einem nominalen Fokuspunkt der optischen Abbildungseinheit, insbesondere des Objektivs auf einer Grenzfläche des Objektträgers entspricht, insbesondere bei dem die Gewichtungsfunktion ein Maximum im Bereich einer Verschiebung aufweist, die dem nominalen Fokuspunkt entspricht. Unter dem Begriff "nominaler Fokuspunkt" ist der Brennpunkt der optischen Abbildungseinheit zu verstehen, in dem sich Strahlen des Autofokuslichtstrahls schneiden, die parallel zur optischen Achse im Strahlengang des optischen Messsystems einfallen. Die gewichtete Minkowski-Gleichung D weist die folgende Formel (II) 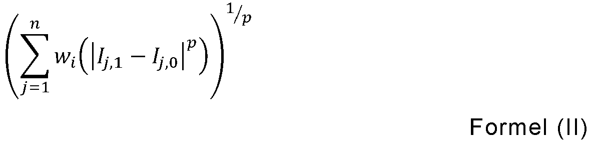 auf, wobei wᵢ die Gewichte sind, die auf Basis des nominalen Fokuspunkt der optischen Abbildungseinheit gewählt sind.

Der ortsauflösende Intensitätsdetektor ist in einer weiteren vorteilhaften Ausgestaltung des erfindungsgemäßen Autofokussystems aus diskreten Detektorpixeln aufgebaut, wobei die rechnerische Verschiebung der beiden Intensitätsprofile gegeneinander durch die Auswerteeinheit pixelweise erfolgt. Der ortsauflösende Intensitätsdetektor ist vorzugsweise ein Liniendetektor, insbesondere ein CCD-Zeilendetektor oder ein CMOS-Zeilendetektor, oder ein zweidimensionaler Flächendetektor, insbesondere eine CCD-Kamera oder eine CMOS-Kamera. Wird als Intensitätsdetektor beispielsweise ein linearer Zeilendetektor verwendet, so zeigt das Intensitätsprofil die gemessenen Intensitätswerte als Funktion der Pixelnummer des Zeilendetektors.

Die Ein- und Auskopplung des Autofokuslichtstrahls erfolgt in einer weiteren vorteilhaften Ausgestaltung des erfindungsgemäßen Autofokussystems über einen dichroitischen Spiegel oder über eine Kombination aus einem Strahlteiler und einem Filter. Der dichroitische Spiegel ist ein wellenlängenselektives Bauelement, das selektiv bestimmte Wellenlängen der auf ihn auftreffenden Strahlung reflektiert und andere Wellenlängen durchlässt. Um dieselbe Wellenlängenselektion zu erreichen, kann auch eine Kombination aus dem Strahlteiler und dem Filter verwendet werden, wobei der Strahlteiler die auftreffende Strahlung in zwei Teile trennt, indem er einen Teil der Strahlung reflektiert und den anderen durchlässt, wobei der Filter nur bestimmte Wellenlängen des einen Teils der Strahlung durchlässt.

Eine weitere vorteilhafte Ausgestaltung des erfindungsgemäßen Autofokussystems sieht vor, sowohl die Intensität der Autofokuslichtquelle zu schalten oder zu steuern bzw. zu regeln sowie auch die Integrationszeit des Intensitätsdetektor zu steuern bzw. zu regeln. So kann vorteilhaft die Autofokuslichtquelle bei der Mikroskopieaufnahme abgeschaltet werden, die Beleuchtung der Probe insgesamt durch die gering gewählte Intensität minimiert werden, und die notwendige Dauer einer Messung bei Beleuchtung über die Integrationszeit beeinflusst werden.

Eine weitere vorteilhafte Ausgestaltung des erfindungsgemäßen Autofokussystems sieht vor, dass im Strahlengang der Autofokuslichtquelle ein weiterer Strahlteiler angeordnet ist und sich zwischen der Autofokuslichtquelle und dem weiteren Strahlteiler ein erstes Abschirmelement befindet. Dieses erste Abschirmelement blendet einen ersten Teilbereich des Autofokuslichtstrahls aus. Somit variiert das erste Abschirmelement den in den Strahlengang des optischen Messsystems eingekoppelten Autofokuslichtstrahl und erzeugt dadurch das auf den Objektträger auftreffende Lichtmuster. Das Abschirmelement kann derart ausgebildet sein, dass es den Autofokuslichtstrahl im Wesentlichen senkrecht zu seiner Propagationsrichtung ausblendet. Dadurch kann das auf den Objektträger auftreffende Lichtmuster im Wesentlichen halbellipsenförmig, insbesondere halbkreisförmig ausgebildet sein. Weiterhin befindet sich zwischen dem weiteren Strahlteiler und dem Intensitätsdetektor ein zweites Abschirmelement, das einen zweiten, zu dem ersten Teilbereich komplementären Teilbereich des reflektierten Autofokuslichtstrahls ausblendet. Die Anordnung aus Strahlungsquelle, Sensor und Objektiv folgt dem Prinzip der monokularen Triangulation (auch through-the-lens - TTL - Triangulation bezeichnet). Durch den in Hin- und Rückrichtung jeweils komplementär ausgeblendeten Teilstrahl wird auf dem Objektträger ein halbkreisförmiger Lichtfleck erzeugt, dessen reflektiertes Lichtmuster in Rückrichtung links oder rechts von der optischen Hauptachse liegt, je nachdem, ob sich die Probe unter oder über dem Fokuspunkt befindet.

In einer weiteren vorteilhaften Ausgestaltung des erfindungsgemäßen Autofokussystems ist die Auswerteeinheit dazu ausgebildet, die Referenzmessung aufgrund
- einer manuellen Fokussierung durch einen Benutzer,
- einer automatischen Fokussierung unter Verwendung einer bildbasierten Autofokusberechnung,
- einer automatischen Fokussierung unter Verwendung einer von dem Autofokussystem separaten, hardwarebasierten Autofokuseinrichtung oder
- einer Kombination hiervon
durchzuführen.

Bei der manuellen Fokussierung wählt der Benutzer den Abstand zwischen dem Objektträger und der optischen Abbildungseinheit aus. Dies ermöglicht ihm die Z-Position in Abhängigkeit von der durchzuführenden Mikroskopie-Methode auszuwählen. Dazu zählt insbesondere auch die Methode der out-off-focus Betrachtung, wobei die Bildschärfe außerhalb des Optimums gewählt wird, weil der zunehmende Kontrast beim Verlassen der Fokusebene vorteilhaft sowohl für das Auge als auch für eine anschließende Bildverarbeitung bestimmte Teile des Bildes besser erkennbar darstellt. Damit können im Gegensatz zu der aus dem Stand der Technik beschriebenen Hardware-basierten Autofokussierung auch Methoden eingesetzt werden, bei denen die Intensitätsprofile Maxima zeigen, die in Höhe und Lage nicht das Optimum der Bildschärfe repräsentieren. Die Intensitätsprofile außerhalb der Fokuslage werden - als Referenz verwendet - an allen weiteren Positionen durch das Autofokussystem mit gleicher Unschärfe wiedergefunden. Dies liegt daran, dass anstatt lediglich Maxima und deren Positionen auszuwerten, das Gesamtspektrum betrachtet und eine rechnerische Verschiebung desselben durchgeführt wird.

Mit anderen Worten liegt ein besonderer Vorteil der vorliegenden Erfindung darin, dass die Referenzmessung bei einer beliebig vom Benutzer wählbaren Z-Position durchgeführt werden und damit ein der bestimmten Z-Position entsprechender Schärfe- bzw. Unschärfewert für die anschließende Autofokuseinstellung vorgegeben werden kann, auf den das Autofokussystem den Fokus der Mikroskop-Optik automatisiert einstellt und die vorgegebene Z-Position beibehält bzw. diese an jeder X/Y-Position des Objektträgers wiederfindet.

Bei einer vorteilhaften Weiterbildung der Erfindung wird zur Ermittlung einer geeigneten Z-Position für die Referenz-Messung statt Bildqualitätsmerkmalen wie Bildschärfe oder Kontrast eine ergebnisorientierte Bildverarbeitung eingesetzt. Hierzu wird eine Bildanalyseeinheit zur computergestützten Analyse von Mikroskopieaufnahmen der optischen Mikroskopievorrichtung vorgesehen.

Zur Bestimmung der Z-Position für die Referenzmessung, mit der das Referenz-Intensitätsprofil gemessen werden soll, wird aus einem Bereich von Z-Positionen, z.B. +30µm bis -120µm relativ zur nominalen Fokuslage, je eine Mikroskopieaufnahme zu je einer Z-Positionen erzeugt, also z.B. bei +30µm, +20µm, +10µm, 0µm, -10µm, -20µm, -30µm, -40µm, -50µm, -60µm, -70µm, -80µm, - 90µm, -100µm, -110µm, -120µm. Diese Serie von Mikroskopieaufnahmen wird hinsichtlich einer Objektanalyse verarbeitet. Eine Objektanalyse kann beispielsweise das Annotieren von Zellen sein. Das so ermittelte Bilderanalyseergebnis, also im Beispiel die Anzahl von Zellen, kann automatisch, z.B. unter Zuhilfenahme von Referenzobjekten, oder durch den Benutzer unter Zuhilfenahme einer graphischen Anzeige des Ergebnisses bewertet werden. Mit anderen Worten wird anhand des Bilderanalyseergebnisses aus der Serie die Mikroskopieaufnahme ausgewählt, die das beste Ergebnis geliefert hat, um die Z-Position für die anschließende Referenzmessung zu ermitteln. Das Intensitätsprofil zu dieser optimalen Z-position dient im Weiteren als Referenz für die erfindungsgemäße Autofokuseinstellung.

In einer vorteilhaften Ausgestaltung wird bei dieser Referenzierung nicht sequentiell eine Bildserie aufgenommen, analysiert und hinsichtlich des Optimums ausgewertet, sondern die Bildverarbeitung bis zum Bildanalyseergebnis (z.B. Anzahl Zellen) erfolgt unmittelbar nach dem Anfahren einer neuen Z-Position und zugehöriger Mikroskopieaufnahme. Auf diese Weise sammeln sich die Bildanalyseergebnisse sukzessive und die optimale Z-Position kann iterativ gefunden werden, was die Suche beschleunigen kann.

In einer weiteren vorteilhaften Ausgestaltung wird die Referenzierung der Z-Position durch den Vergleich bzw. die Verwendung von mit zwei unterschiedlichen Mikroskopie-Methoden aufgenommenen Mikroskopieaufnahmen optimiert. Die Bildanalyseeinheit ist hierbei ausgebildet, mit unterschiedlichen Mikroskopiemethoden erzeugte Mikroskopieaufnahmen automatisiert auszuwerten. Die Auswerteeinheit ist wiederum ausgebildet, für die Referenzmessung den Abstand zwischen der optischen Abbildungseinheit und dem Objektträger (Z-Position) derart vorzugeben, dass ein Bildanalyseergebnis einer ersten Mikroskopieaufnahme einer Probe unter Anwendung einer ersten Mikroskopie-Methode in Übereinstimmung mit einem Bildanalyseergebnis einer zweiten Mikroskopieaufnahme derselben Probe unter Anwendung einer zweiten Mikroskopie-Methode gebracht wird, wobei zumindest eine der Mikroskopie-Methoden die optische Abbildungseinheit verwendet. Mikroskopiemethoden können z.B. Hellfeld-Mikroskopie und Fluoreszenz-Mikroskopie sein.

Eine Fluoreszenz-Mikroskopieaufnahme kann mit dem zuvor beschriebenen Autofokussystem referenziert werden. Diese Mikroskopie-Methode ist besonders gut geeignet, kontrastreiche Aufnahmen in der Fokuslage zu liefern. Die Bildverarbeitung durch die Bildanalyseeinheit liefert ein zugehöriges Bildanalyseergebnis, z.B. die Anzahl der Zellen der Probe. Dieselbe Probe kann mit der Mikroskopie-Methode der Hellfeld-Mikroskopie untersucht werden, wobei die Referenzierung des Autofokussystems das Bildanalyseergebnis der Fluoreszenz-Aufnahme wie folgt zugrunde legt. Das Bildanalyseergebnis der Hellfeld-Mikroskopieaufnahme an einer Z-Position wird mit mindestens einer weiteren Aufnahme an einer weiteren Z-Position verglichen und ins Verhältnis zu dem Bildanalyseergebnis der Fluoreszenzaufnahme gesetzt. Durch Wiederholung wird die Z-Position gefunden, welche die beste Übereinstimmung der Bildanalyseergebnisse der beiden Mikroskopie-Methoden liefert. Diese Z-Position dient im Weiteren dem Autofokussystem als Referenz. Diese Referenzierung kann durch die Anzahl der Proben und geeignete Mittelungen an Genauigkeit und Fehlertoleranz gewinnen. Damit ist ein typisches Problem lösbar: Eine Untersuchung einer mit Proben gefüllten Mikroplatte in der Hellfeld-Mikroskopie wird in der Bildanalyse erheblich genauer, wenn einige Proben der Mikroplatte einer Färbung geopfert werden, um diese als Fluoreszenz-Proben dann zur beschriebenen Kalibrierung des Autofokussystems heranzuziehen. Diese Art der Kalibrierung der Hellfeld-Mikroskopie-Fokuseinstellung kann nur mit dem erfindungsgemäßen Autofokussystem erreicht werden, das Z-Positionen außerhalb der nominalen Fokuslage referenzieren kann.

Das Autofokussystem weist in einer weiteren vorteilhaften Ausgestaltung einen Antrieb zum Einstellen des Abstandes zwischen dem optischen Abbildungssystem und dem Objektträger und eine Steuereinheit zur Ansteuerung des Antriebs aufgrund des Autofokuswerts auf. Der Antrieb kann beispielsweise mit dem Objektträger, der optischen Abbildungseinheit und/oder einzelnen oder mehreren optischen Bauteilen der optischen Abbildungseinheit verbunden sein. Dadurch können entweder einzelne oder mehrere optische Bauteile, insbesondere Linsen der optischen Abbildungseinheit, die gesamte optische Abbildungseinheit oder der Objektträger bewegt werden, um den Abstand zwischen der optischen Abbildungseinheit und dem Objektträger einzustellen, d.h. zu vergrößern oder zu verkleinern. Als Antrieb kann beispielsweise ein piezoelektrischer Motor verwendet werden, wodurch die Genauigkeit der Fokuseinstellung weiter erhöht wird.

Bei einer weiteren vorteilhaften Ausgestaltung ist vorgesehen, dass die Steuereinheit ausgebildet ist, anhand des Vorzeichens des Autofokuswerts eine Verstellrichtung für den Antrieb vorzugeben. Der Autofokuswert wird von der Auswerteeinheit als die rechnerische Verschiebung ermittelt, bei der die Distanzfunktion ein Minimum aufweist. Dieses Minimum liegt bei einer rechnerischen Verschiebung von v = 0, wenn die Intensitätsprofile auch ohne rechnerische Verschiebung übereinstimmen. In dem Fall muss der Abstand zwischen dem Objektträger und der optischen Abbildungseinheit für die Fokuseinstellung nicht verändert werden, da die Fokuseinstellung bereits optimal ist. Das Minimum liegt bei einer rechnerischen Verschiebung mit einem positiven Wert, wenn der Abstand zwischen dem Objektträger und der optischen Abbildungseinheit zu klein ist und daher zur Fokuseinstellung vergrößert werden muss. Wenn der Abstand zwischen dem Objektträger und der optischen Abbildungseinheit zu groß ist und daher zur Fokuseinstellung verringert werden muss, dann liegt das Minimum liegt bei einer rechnerischen Verschiebung mit einem negativen Wert (oder umgekehrt).

Die Steuereinheit ist in einer weiteren vorteilhaften Ausgestaltung des erfindungsgemäßen Autofokussystems ausgebildet, anhand des Betrages des Autofokuswerts eine Verstellgeschwindigkeit für den Antrieb vorzugeben. Der Betrag des Autofokuswerts gibt ein ungefähres Maß für den erforderlichen Verstellweg an. Je größer der erforderliche Verstellweg ist, desto höher ist somit die Geschwindigkeit, mit der die Verstellung vorgenommen wird, sodass eine schnelle Annäherung an den gewünschten Fokus erfolgt. Hierbei kann insbesondere vorgesehen sein, dass die Bestimmung der Distanzfunktion während einer automatischen Fokuseinstellung iterativ wiederholt wird. Während der Verstellbewegung wird der Autofokuswert somit mehrfach oder kontinuierlich neu ermittelt. Je näher der Abstand zwischen Abbildungseinheit und Objektträger dem gewünschten Fokuspunkt kommt, umso langsamer erfolgt die weitere Verstellbewegung, was wiederum eine exakte Fokuseinstellung ohne Über- bzw. Unterschwinger ermöglicht.

In einer alternativen Ausgestaltung ist die Steuereinheit des Autofokussystems dazu ausgebildet, anhand des Autofokuswertes eine absolute Position für den Antrieb vorzugeben. Auf eine iterative Annäherung kann dann, muss jedoch nicht verzichtet werden. Dazu wird der Autofokuswert in einen Verstellweg umgerechnet. Diese Relation ist bekannt, sobald (erstmals und ggf. einmalig) nach einer Veränderung der Z-Position der ermittelte Autofokuswert der erfolgreichen Autofokussierung mit diesem konkreten Verstellweg ins Verhältnis gesetzt wird. So ist vorteilhaft wegen des erhöhten Tempos nach einer Referenzmessung und einer iterativ durchgeführten Autofokussierung im Weiteren eine Autofokussierung mit nur einer einzigen Ermittlung des Autofokuswertes möglich. Dieses besonders schnelle Autofokussierung kann nach Erfahrung von Genauigkeit, Stabilität und Robustheit einmalig, mehrfach oder regelmäßig durch das iterative Einstellen überprüft werden. In diesem Sinne stellt die Relationsbestimmung von Autofokuswert zu Verstellweg mit dem o.g. iterativen Heranfahren eine Autokalibrierung des Autofokusgerätes für die "absolute Autofokussierung" dar.

Ein weiterer Aspekt der Erfindung sieht ein optisches Messsystem vor. Dieses optische Messsystem umfasst ein Autofokussystem nach einem der Ansprüche 1 bis 14, ein Mikroskop, ein Mikroplatten-Lesegerät und eine Transportvorrichtung. Die Transportvorrichtung ist dazu ausgebildet, einen Objektträger zwischen einer ersten Objektträgerposition in einem Strahlengang des Mikroskops und einer zweiten Objektträgerposition in einem Strahlengang des Mikroplatten-Lesegeräts hin- und her zu bewegen. Der Vorteil dieses optischen Messsystems besteht darin, dass der Benutzer sowohl Mikroskopieaufnahmen als auch Messungen mit dem Mikroplatten-Lesegerät durchführen kann, ohne hierbei den Objektträger zwischen dem Mikroskop und dem Mikroplatten-Lesegerät hin- und hertragen zu müssen. Dadurch können sowohl mikroskopische Langzeitmessungen als auch Langzeitmessungen mit dem Mikroplatten-Lesegerät seriell oder wechselweise durchgeführt werden.

Bei einer weiteren vorteilhaften Ausgestaltung ist vorgesehen, dass die Steuereinheit auch eine Speichereinrichtung aufweist, welche eine Speicherung sämtlicher Autofokuswerte, bzw. Z-Positionen gemeinsam mit den zugehörigen x,y-Koordinaten des Objektträgers ermöglicht. Die Objektträgerposition kann hierbei im einfachsten Fall durch die Bezeichnung des Wells einer Mikroplatte repräsentiert werden. Die Liste von x,y,z-Koordinaten ist im Wesentlichen auch ein Charakteristikum des Objektträgers bzw. der Mikroplatte. Diese Information kann vorteilhaft zeitsparend abgerufen werden, wenn derselbe Objektträger wieder in eine bestimmte Fokussierung gebracht werden soll. Auch ist diese Information transferierbar, wenn in einem Gerät mit mehreren Strahlengängen die Fokussierung an verschiedenen Messpositionen oder Abbildungsstrahlengängen zeitsparend Verwendung finden.

Bei einer vorteilhaften Weiterbildung der Erfindung wird das hardwarebasierte Autofokussystem vorteilhaft mit einer bildbasierten Autofokusberechnung kombiniert, um in gewissen Zeitabständen, insbesondere in einer Aufwärmphase, das hardwarebasierte Autofokussystem durch eine neue Referenzmessung zu rekalibrieren. Es wurde nämlich herausgefunden, dass in einer Aufwärmphase nicht nur die Fokuseinstellung der optischen Abbildungseinheit sich verändert ("wandert"), sodass eine Nachstellung des Fokuspunkt erforderlich wird, sondern auch der durch das hardwarebasierte Autofokussystem erhaltene Autofokuswert eine Veränderung erfährt. Diese sind, da der Strahlengang von Abbildungsoptik und Autofokussystem nur teilweise zusammenfallen, nicht notwendig gleich groß, sodass die genannte Rekalibrierung des Autofokussystems vorteilhaft ist.

Für eine Rekalibrierung eines hardwarebasierten Autofokussystems wird eine weitere Referenzmessung durchgeführt, um einen ein neues Referenzmuster zu ermitteln, welches als Referenz für die Messung der Verschiebung des reflektierten Lichtmusters dient. Hierzu wird ein auf dem Objektträger oder einem dem Objektträger zugeordneten Trägersystem angeordnetes Testmuster in den Strahlengang gebracht. Auf dieses erfolgt nun eine automatische Fokussierung unter Verwendung einer bildbasierten Autofokusberechnung. Hierzu kann insbesondere eine Metrik verwendet, um die Z-Position zu ermitteln, bei der das beste, d.h. hinsichtlich einer Kenngröße wie etwa des Kontrasts optimierte Bild des Testmusters liefert.

Ist durch die genannte bildbasierte Autofokusberechnung der Fokuspunkt für das Testmuster gefunden worden, so wird dieser aufgefundene Fokuspunkt verwendet, um ein neues Referenzmuster zu ermitteln.

Da das Testmuster in der Regel nicht auf derselben z-Höhe wie das zuvor betrachtete Objekt liegt, geschieht dies insbesondere, indem zu dem neu aufgefundenen Fokuspunkt ein bekannter Abstand zwischen dem zuletzt fokussierten Objekt und dem Objektträger oder dem Trägersystem addiert wird. Hierbei wird davon ausgegangen, dass der Abstand zwischen Objektträger und Objekt auch in der Aufwärmphase konstant bleibt. Aus der vor der Rekalibrierung eingestellten Z-Position der Optik und der alten und neuen Z-Position für das Testmuster kann somit die neue Z-Position und damit der Fokuspunkt für das zuletzt betrachtete Objekt ermittelt werden.

Die an sich langsame und berechnungsaufwändige bildbasierte Autofokusbestimmung, die dem Fachmann an sich bekannt ist, kann somit vorteilhaft genutzt werden, um in gewissen Zeitabständen eine Rekalibrierung des erheblich schnelleren und berechnungsärmeren hardwarebasierten Autofokussystems durchzuführen.

Anhand der beigefügten Zeichnungen wird ein Ausführungsbeispiel des erfindungsgemäß ausgestalteten Autofokussystems näher beschrieben und erläutert.

Es zeigen:
- Figur 1: eine schematische Darstellung eines ersten Ausführungsbeispiels eines erfindungsgemäßen Autofokussystems;
- Figur 2A: ein durch den in einen Strahlengang eines Mikroskops eingekoppelten Autofokuslichtstrahl auf einem Objektträger des ersten Ausführungsbeispiels des Autofokussystems erzeugten, halbkreisfömigen Lichtfleck;
- Figur 2B: ein aufgrund eines am Objektträger des ersten Ausführungsbeispiels reflektierten Lichtanteils auf einen in einer Richtung ortsauflösenden Intensitätsdetektor erzeugtes Lichtmuster;
- Figur 3: ein Ausführungsbeispiel eines erfindungsgemäßen Verfahrens zur Fokuseinstellung;
- Figur 4a: ein dem ersten Ausführungsbeispiel mit dem Intensitätsdetektor detektiertes Intensitätsprofil (durchgezogene Linie) und ein detektiertes Referenz-Intensitätsprofil (gestrichelte Linie);
- Figur 4b: mehrere im ersten Ausführungsbeispiel mit dem Intensitätsdetektor detektierte Intensitätsprofile bei unterschiedlichen Abständen zwischen einer optischen Abbildungseinheit und dem Objektträger;
- Figur 5a: ein weiteres Ausführungsbeispiel eines dem ersten Ausführungsbeispiel mit dem Intensitätsdetektor detektiertes Intensitätsprofil (durchgezogene Linie);
- Figur 5b: zusätzlich zu dem Intensitätsprofil aus Figur 5a, das verschobene Intensitätsprofil (gestrichelte Linie) vor Anwendung der Gewichtungsfunktion und das Referenz-Intensitätsprofil (punktierte Linie);
- Figur 6: ein durch eine rechnerische Verschiebung des von dem Intensitätsdetektor aufgrund des reflektierten Lichtmusters detektierten Intensitätsprofils gegenüber dem Referenz-Intensitätsprofil ermitteltes Abweichungsmaß der beiden Intensitätsprofile als Funktion der Verschiebung;
- Figur 7: Gewichtungsfaktoren als Funktion der fortlaufenden Pixelnummer des Intensitätsdetektors;
- Figur 8: eine schematische Darstellung des Objektträgers in Seitenansicht, der als Mikroplatte mit sechs Wells ausgebildet ist;
- Figur 9A: ein in dem ersten Ausführungsbeispiel des Autofokussystems mit dem Intensitätsdetektor detektiertes Referenz-Intensitätsprofil von einem ersten Well (gestrichelte Linie mit Rauten) und ein detektiertes Intensitätsprofil von einem zweiten Well (durchgezogene Linie mit Dreiecken) der Mikroplatte aus Figur 7 vor einer Fokuseinstellung;
- Figur 9B: das in Figur 9A mit dem Intensitätsdetektor detektierte Referenz-Intensitätsprofil von dem ersten Well (gestrichelte Linie mit Rauten) und ein detektiertes Intensitätsprofil von dem zweiten Well (durchgezogene Linie mit Dreiecken) der Mikroplatte aus Figur 7 nach der Fokuseinstellung;
- Figur 10: die relative Z-Position eines Objektivs des ersten Ausführungsbeispiels eines Autofokussystems als Funktion der fortlaufend nummerierten an Fokuseinstellungen, je zwei für jedes Well einer Mikroplatte mit 96 Wells;
- Figur 11: ein Ausführungsbeispiel eines optischen Messsystems;
- Figur 12: ein Ausführungsbeispiel eines Mikroplatten-Lesegerätes mit Mikroskop und Mikroplattenträger und
- Figur 13: ein Beispiel einer Musterplatte mit einem für eine bildbasierte Autofokusbestimmung geeigneten Testmuster.

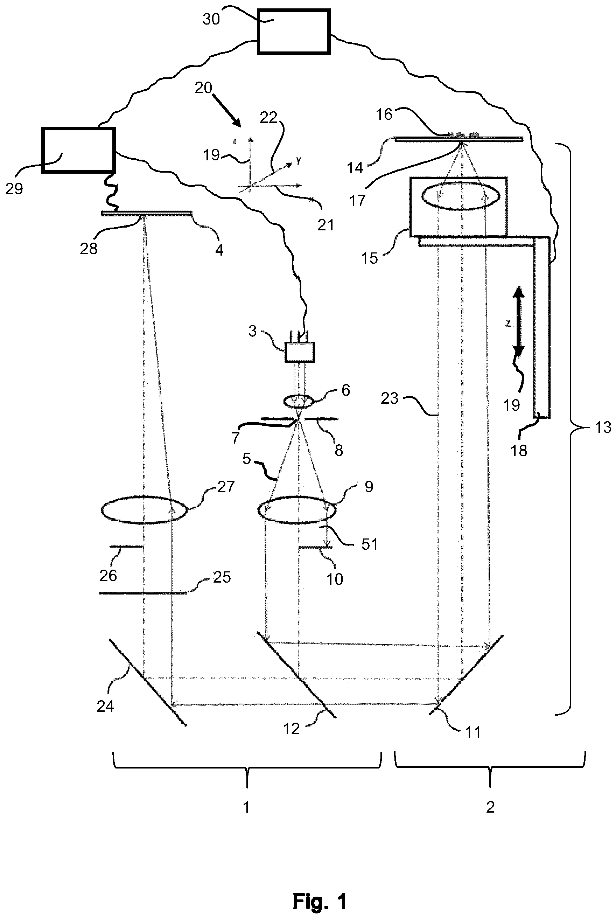

Figur 1 zeigt eine schematische Darstellung eines ersten Ausführungsbeispiels des erfindungsgemäßen Autofokussystems 1 für ein Mikroskop 2. Von dem Mikroskop 2 sind hierbei lediglich dessen Objektiv 15 und der Objektträger 14 gezeigt. Das Autofokussystem 1 umfasst eine Autofokuslichtquelle 3 und einen in einer Richtung ortsauflösenden Intensitätsdetektor 4 in Form eines Zeilendetektors. Die Autofokuslichtquelle 3 erzeugt einen Autofokuslichtstrahl 5. Sie ist im vorliegenden Ausführungsbeispiel als Leuchtdiode ausgebildet. In Strahlungsrichtung des Autofokuslichtstrahls 5 weist das Autofokussystem 1 hinter der Autofokuslichtquelle 3 eine erste Sammellinse 6 auf, die den im Wesentlichen parallel einfallenden Autofokuslichtstrahl 5 zunächst auf einen Brennpunkt 7 der erste Sammellinse 6 fokussiert. Im Bereich dieses Brennpunkts 7 weist das Autofokussystem 1 eine Schlitzplatte 8 auf, die die Breite des Autofokuslichtstrahls 5 im Brennpunkt 7 begrenzt.

In Strahlungsrichtung des Autofokuslichtstrahls 5 hinter dem Brennpunkt 7 kommt es zu einer Auffächerung des Autofokuslichtstrahls 5, wobei der aufgefächerte Autofokuslichtstrahl 5 nach dem Durchtritt durch eine zweite Sammellinse 9 wieder parallel zur Strahlungsrichtung verläuft. In Strahlungsrichtung hinter der zweiten Sammellinse 9 ist ein erstes Abschirmelement 10 des Autofokussystems 1 angeordnet. Dieses erste Abschirmelement 10 blendet einen ersten Teilbereich 51 des Autofokuslichtstrahls 5 aus. Das erste Abschirmelement 10 ist eine Blende, die derart ausgebildet ist, dass sie den ersten Teilbereich 51 des Autofokuslichtstrahls 5 im Wesentlichen senkrecht zu seiner Strahlungsrichtung sowie halbseitig ausblendet.

Der halbseitig ausgeblendete Autofokuslichtstrahl 5 wird von einem dichroitischen Spiegel 11, der in Strahlungsrichtung hinter dem ersten Abschirmelement 10 angeordnet ist, reflektiert und in den Strahlengang 13 des Mikroskops 2 eingekoppelt. Der dichroitische Spiegel 11 ermöglicht einerseits die Ein- und Auskopplung des Autofokuslichtstrahls 5 in den bzw. aus dem Strahlengang 13 des Mikroskops 2 während der Fokuseinstellung und andererseits die Zu- und Ableitung eines Messlichtstrahls einer separaten Messstrahlungsquelle des Mikroskops 2 zum Objektträger 14 während einer Mikroskopieaufnahme.

Der in den Strahlengang 13 eingekoppelte Autofokuslichtstrahl 5 wird in Richtung eines Objektträgers 14 des Mikroskops 2 geleitet. Zwischen dem dichroitischen Spiegel 11 und dem ersten Abschirmelement 10 ist ein erster Strahlteiler 12 angeordnet, der den halbseitig ausgeblendete Autofokuslichtstrahl 5 durch teilweise Reflektion zum dichroitischen Spiegel 11 umlenkt. Im Strahlengang 13 des Mikroskops 2 ist in Strahlungsrichtung des eingekoppelten Autofokuslichtstrahls 5 hinter dem dichroitischen Spiegel 11 eine optische Abbildungseinheit 15 in Form eines Objektivs angeordnet. Das Objektiv 15 fokussiert den eingekoppelten Autofokuslichtstrahl 5 auf den Objektträger 14, wodurch auf dem Objektträger 14 ein Lichtmuster 17 erzeugt wird. Im vorliegenden Ausführungsbeispiel ist der Objektträger 14 eine einfache Mikroskopie-Glasplatte.

Das Objektiv 15 ist mit einem Antrieb 18 in Form eines piezoelektrischen Motors gekoppelt. Mit diesem Antrieb 18 lässt sich das Objektiv 15 bewegen und dadurch ein Abstand zwischen dem Objektiv 15 und dem Objektträger 14 entweder vergrößern oder verkleinern. Der Abstand zwischen dem Objektträger 14 und dem Objektiv 15 bildet eine z-Achse 19 in einem dreidimensionalen fiktiven Koordinatensystem 20 aus, bei dem eine x-Achse 21 und y-Achse 22 komplanar zueinander in einer Objektträgerebene des Objektträgers 14 und im Wesentlichen senkrecht zu der z-Achse 19 liegen. Bei einer Veränderung des Abstandes zwischen dem Objektträger 14 und dem Objektiv 15 ändert sich eine Z-Position des Objektivs entlang der z-Achse 19.

Beim Auftreffen auf dem Objektträger 14 und der darauf aufgebrachten Probe 16 wird der eingekoppelte Autofokuslichtstrahl 5 und damit das dabei erzeugte Lichtmuster 17 an drei reflektierenden Grenzflächen mit abweichendem Brechungsindex reflektiert. Da als Objektträger 14 eine Glasplatte verwendet wird, auf der sich die biologische Probe in dem wässrigem Medium befindet, wird ein erster Teil des eingekoppelten Autofokuslichtstrahls 5 an einer auf der dem Objektiv 15 zugewandten Seite der Glasplatte vorhandenen Luft/Glas-Grenzfläche, ein zweiter Teil an einer auf der dem Objektiv 15 abgewandten Seite der Glasplatte vorhandenen Glas/Medium-Grenzfläche und ein dritter Teil an der darüber liegenden Medium/Proben-Grenzfläche reflektiert. Der reflektierte Lichtanteil 23 des Autofokuslichtstrahls 5 wird daraufhin in Rückrichtung aus dem Strahlengang 13 des Mikroskops 2 mittels des dichroitischen Spiegels 11 ausgekoppelt, passiert daraufhin den ersten Strahlteiler 12 und wird mittels eines weiteren Spiegels 24 in Richtung des Liniendetektors 4 geleitet.

Der Spiegel 24 ist in Strahlungsrichtung des reflektierten Lichtanteils 23 des Autofokuslichtstrahls 5 hinter dem ersten Strahlteiler 12 angeordnet. In Strahlungsrichtung des reflektierten Lichtanteils 23 des Autofokuslichtstrahl 5 ist hinter dem Spiegel 24 zunächst ein Filter 25 und dahinter ein zweites Abschirmelement 26 angeordnet. Das zweite Abschirmelement 26 blendet einen zweiten, zu dem ersten Teilbereich 51 komplementären Teilbereich des reflektierten Lichtanteils 23 des Autofokuslichtstrahls 5 aus. Eine in Strahlungsrichtung hinter dem zweiten Abschirmelement 26 angeordnete dritte Sammellinse 27 fokussiert den reflektierten Lichtanteil 23 des Autofokuslichtstrahls 5 auf den Liniendetektor 4, wobei der reflektierte Lichtanteil 23 beim Auftreffen auf den Liniendetektor 4 ein reflektiertes Lichtmuster 28 erzeugt.

Durch die beiden zueinander komplementär im Strahlengang der Autofokuslichtquelle angeordneten Abschirmelemente 10, 26 wird außerhalb der Fokusebene eine Triangulation erzeugt, sodass die an unterschiedlichen Grenzflächen reflektierten Lichtanteile zueinander seitlich verschoben auf dem Liniendetektor 4 auftreffen. Somit enthält das reflektierte Lichtmuster 28 - im Gegensatz zu dem auf dem Objektträger 14 auftreffenden Lichtmuster 17 - unter anderem Informationen über den Abstand zwischen dem Objektiv 15 und dem Objektträger 14 sowie zwischen dem Objektiv 15 und der biologischen Probe 16. Der Liniendetektor 4 ist mit einer Auswerteeinheit 29 verbunden, die das reflektierte und auf den Liniendetektor auftreffende Lichtmuster 28 in ein Detektorausgangsignal bzw. einen Autofokuswert umwandelt. Dieser Autofokuswert wird an eine mit der Auswerteeinheit 29 und dem Antrieb 18 verbundene Steuereinheit 30 weitergeleitet und dient als Steuersignal zur Fokuseinstellung. Anhand des Steuersignals bewegt der Antrieb 18 das Objektiv 15 entlang der z-Achse.

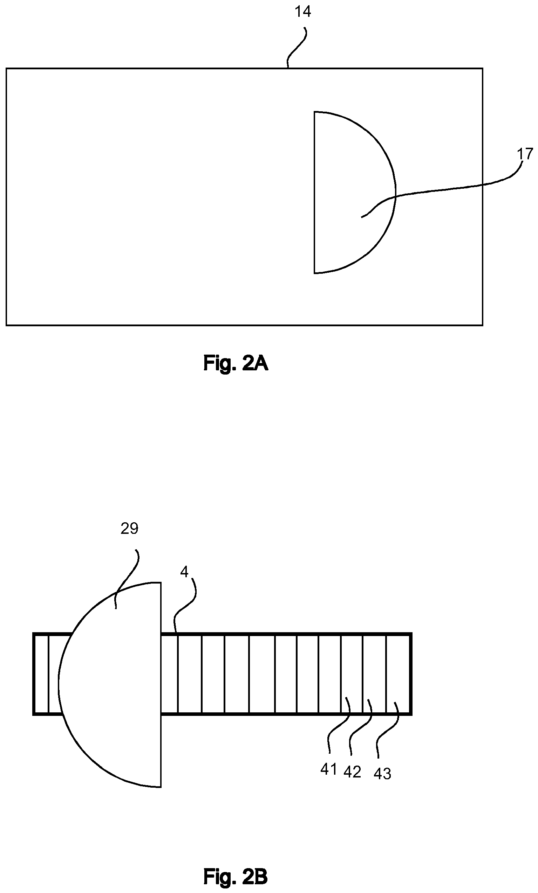

Figur 2A zeigt das beim Auftreffen des in den Strahlengang 13 des Mikroskops 2 eingekoppelten Autofokuslichtstrahls 5 auf den Objektträger 14 in dem ersten Ausführungsbeispiel des erfindungsgemäßen Autofokussystems 1 erzeugten Lichtmusters 17. Durch das erste Abschirmelement 10 wurde - wie bereits zuvor in Figur 1 erläutert - der erste Teilbereich 51 des Autofokuslichtstrahls 5 ausgeblendet. Dadurch weist das Lichtmuster 17 eine im Wesentlichen halbkreisförmige Form auf. Figur 2B zeigt das beim Auftreffen des reflektierten Lichtanteils 23 des Autofokuslichtstrahl 5 auf den Liniendetektor 4 erzeugte, reflektierte Lichtmuster 28. Aufgrund der Reflektion weist dieses reflektierte Lichtmuster 28 Informationen über den Abstand des Objektivs 15 vom Objektträger 14 auf. Der Liniendetektor 4 umfasst eine Mehrzahl an diskreten Detektorpixeln 41, 42, 43, die jeweils die Intensität des Lichtmusters 28 detektieren und in ein Detektorausgangssignal umwandeln. Das daraus ermittelte Intensitätsprofil als Funktion der diskreten Detektorpixel wird an die Auswerteeinheit 29 weitergeleitet.

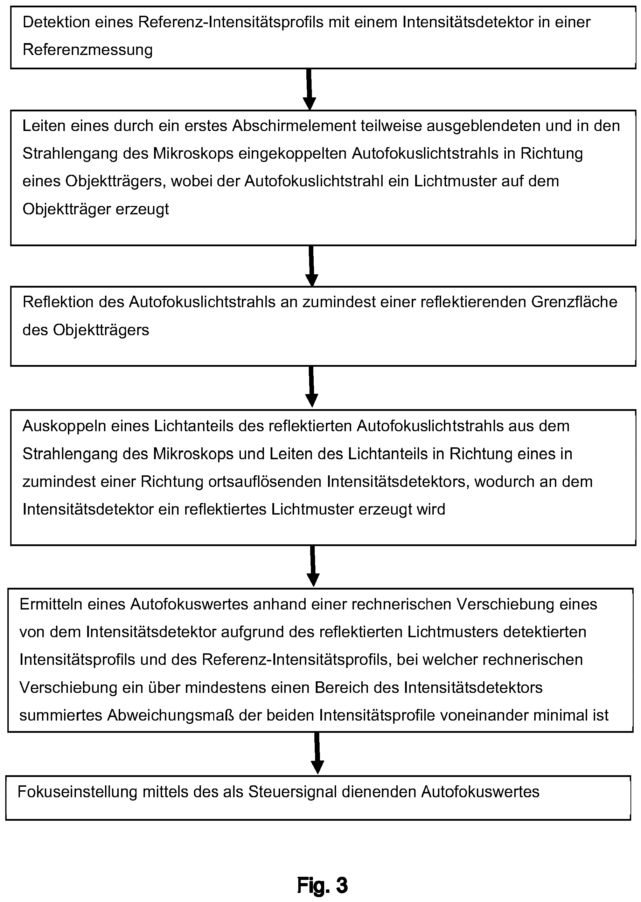

Figur 3 zeigt ein Ausführungsbeispiel eines erfindungsgemäßen Verfahrens zur Fokuseinstellung bei dem Mikroskop 2, dass mit dem zuvor beschriebenen ersten Ausführungsbeispiel des Autofokussystems 1 durchführbar ist. In einem ersten Schritt wird im Rahmen einer Referenzmessung ein Referenz-Intensitätsprofil wie folgt ermittelt:
Zunächst wird der Abstand zwischen dem Objektiv 15 und dem Objektträger 14 manuell vom Benutzer des Mikroskops 2 derart gewählt, dass die Umrisse bzw.

Kanten der Probe 16 auf dem Objektträger 14 deutlich sichtbar sind und somit der Fokuspunkt des Objektivs 15 im Bereich der reflektierenden Grenzflächen des Objektträgers 14 liegt. Aufgrund dieser manuellen Fokuseinstellung weist die mit einer separaten Mikroskopkamera aufgenommene Mikroskopieaufnahme eine optimale Fokuseinstellung und dadurch eine hohe Bildschärfe auf. Alternativ zur hohen Bildschärfe können andere Bildqualitätseigenschaften durch entsprechende Einstellung Z-Positionen optimiert werden, da erfolgreiche Mikroskop-Methoden auch spezielle defokussierte Fokuseinstellungen verfolgen. Im nachfolgenden wird daher von einer automatischen Z-Positionseinstellung gesprochen bzw. diese näher erläutert.

Danach wird der von der Leuchtdiode 3 erzeugte Autofokuslichtstrahl 5 zunächst von dem ersten Abschirmelement 10 senkrecht zu seiner Propagationsrichtung sowie halbseitig ausgeblendet und danach von dem dichroitischen Spiegel 11 in den Strahlengang 13 des Mikroskops 2 eingekoppelt und in Richtung des Objektträgers 14 geleitet, wobei der Autofokuslichtstrahl 5 beim Auftreffen auf den Objektträger 14 ein Lichtmuster 17 auf dem Objektträger 14 erzeugt. Durch das halbseitige Ausblenden ist das auf den Objektträger 14 auftreffende Lichtmuster 17 halbkreisförmig ausgebildet. Danach wird der Autofokuslichtstrahl 5 an den zuvor beschriebenen drei reflektierenden Grenzflächen des Objektträgers 14 reflektiert. Ein Lichtanteil 23 des reflektierten Autofokuslichtstrahl 5 wird aus dem Strahlengang 13 des Mikroskops 2 ausgekoppelt und in Richtung des Liniendetektors 4 geleitet. Das zwischen dem Strahlteiler 12 und dem Intensitätsdetektor 4 angeordnete zweite Abschirmelement 26 blendet den zweiten, zu dem ersten Teilbereich 51 komplementären Teilbereich des reflektierten Autofokuslichtstrahls 5 aus. Der Lichtanteil 23 des reflektierten Autofokuslichtstrahl 5 erzeugt auf dem Liniendetektor 4 ein reflektiertes Lichtmuster 28. Der Liniendetektor 4 detektiert aufgrund des reflektierten Lichtmusters 28 ein Referenz-Intensitätsprofil.

Bei einer der Referenzmessung nachfolgenden Autofokussierung bzw. Z-Positionseinstellung wird wie folgt vorgegangen:
Der von der Leuchtdiode 3 erzeugte Autofokuslichtstrahl 5 wird erneut von dem ersten Abschirmelement 10 senkrecht zu seiner Propagationsrichtung sowie halbseitig ausgeblendet und danach von dem dichroitischen Spiegel 11 in den Strahlengang 13 des Mikroskops 2 eingekoppelt und in Richtung des Objektträgers 14 geleitet, wobei der Autofokuslichtstrahl 5 beim Auftreffen auf den Objektträger 14 ein Lichtmuster 17 auf dem Objektträger 14 erzeugt. Durch das halbseitige Ausblenden ist das auf den Objektträger 14 auftreffende Lichtmuster 17 halbkreisförmig ausgebildet. Danach wird der Autofokuslichtstrahl 5 an den zuvor beschriebenen drei reflektierenden Grenzflächen des Objektträgers 14 reflektiert. Ein Lichtanteil 23 des reflektierten Autofokuslichtstrahl 5 wird aus dem Strahlengang 13 des Mikroskops 2 ausgekoppelt und in Richtung des Liniendetektors 4 geleitet. Das zwischen dem Strahlteiler 12 und dem Intensitätsdetektor 4 angeordnete zweite Abschirmelement 26 blendet den zweiten, zu dem ersten Teilbereich 51 komplementären Teilbereich des reflektierten Autofokuslichtstrahls 5 aus.

Der Lichtanteil 23 des reflektierten Autofokuslichtstrahl 5 erzeugt auf dem Liniendetektor 4 ein reflektiertes Lichtmuster 28. Der Liniendetektor 4 detektiert ein zweites Intensitätsprofil. Daraufhin wird ein Autofokuswert anhand einer rechnerischen Verschiebung des von dem Liniendetektor 4 aufgrund des reflektierten Lichtmusters detektierten Intensitätsprofils und des im Rahmen der vorangegangenen Referenzmessung detektierten Referenz-Intensitätsprofils ermittelt, bei dem ein über mindestens einen Bereich des Intensitätsdetektors summiertes Abweichungsmaß der beiden Intensitätsprofile voneinander minimal ist. Dieser Autofokuswert wird als Steuersignal an die Steuereinheit 30 weitergeleitet und zur Fokuseinstellung verwendet. Bei der Fokuseinstellung dient der Autofokuswert als Steuersignal zur Einstellung des Abstands zwischen dem Objektiv 15 und dem Objektträger 14.

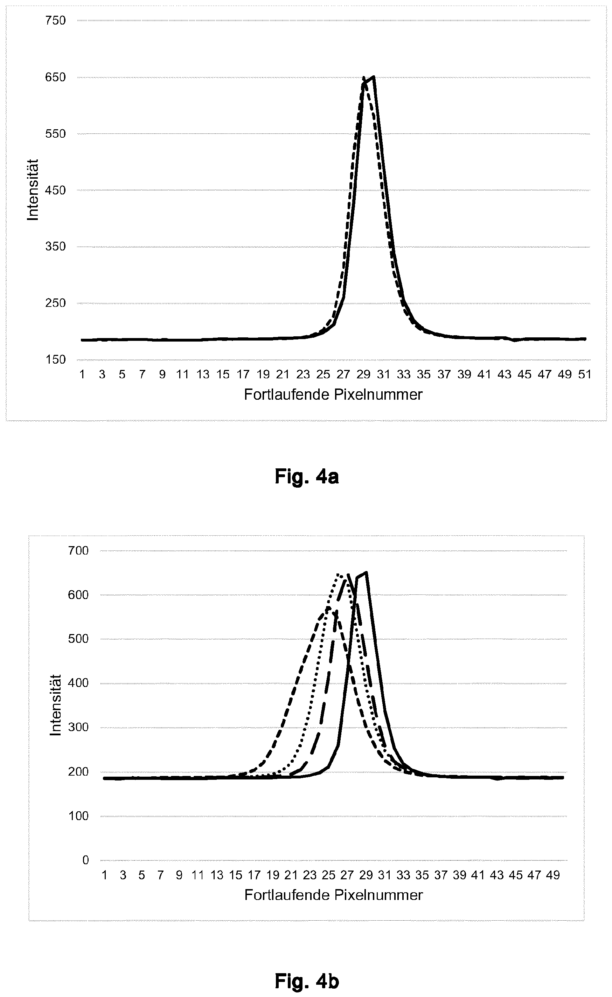

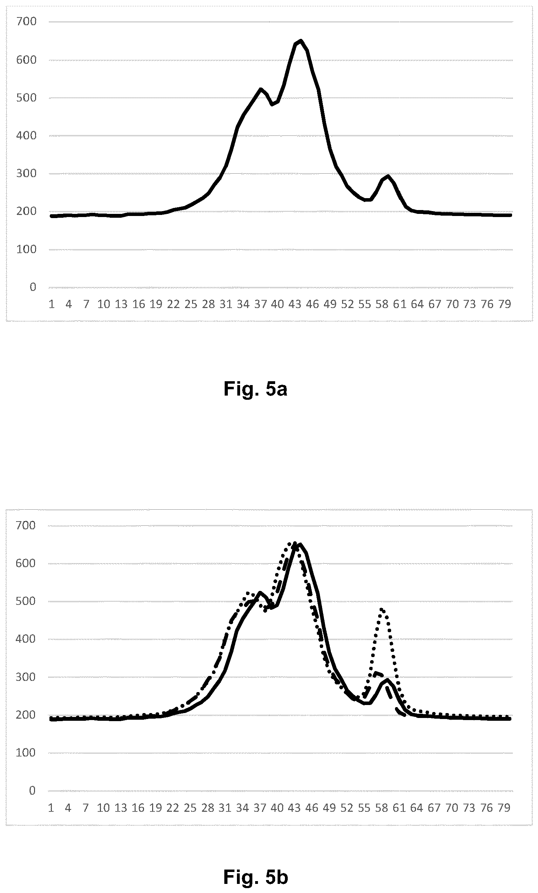

Figur 4a zeigt ein in dem ersten Ausführungsbeispiel des Autofokussystems mit dem Liniendetektor 4 aufgrund des reflektierten Lichtmusters 28 detektiertes Intensitätsprofil (durchgezogene Linie) und ein im Rahmen einer Referenzmessung detektiertes Referenz-Intensitätsprofil (gestrichelte Linie). Beide Intensitätsprofile sind hier vereinfacht dargestellt und zeigen je nur ein einziges Maximum, das z.B. durch die (Haupt-)Reflexion an der Unterseite des Objektträgers entsteht. Weitere Reflexionen sind nicht erkennbar und das Objekt liegt nur dann bildscharf vor, wenn auch die (bekannte/unbekannte) Dicke des Plattenträgers (hier besonders dünn) berücksichtigt wird. Das von dem Liniendetektor 4 aufgrund des reflektierten Lichtmusters 28 detektierte Intensitätsprofil oder das Referenz-Intensitätsprofil weisen bei nicht besonders dünnen Objektträgern typischerweise mehrere Peaks bzw. lokale Maxima auf, wobei die Anzahl der Peaks im Wesentlichen abhängig von der Anzahl an reflektierenden Grenzflächen im Bereich des Objektträgers 14 und der Probe 16 ist. Ein solches Intensitätsprofil mit mehreren Peaks ist in einem zweiten Ausführungsbeispiel in Figur 5a gezeigt.

Wie aus Figur 4a ersichtlich ist, ist das detektierte Intensitätsprofil gegenüber dem Referenz-Intensitätsprofil entlang der x-Achse zu höheren Pixelnummern verschoben. Diese Verschiebung resultiert aus einer Fokusveränderung (Fokusdrift), bei der sich der Abstand zwischen dem Objektiv 15 des Mikroskops 2 und dem Objektträger 14 gegenüber einer optimalen Fokuseinstellung verändert hat. Würde der Benutzer eine Mikroskopieaufnahme mit der Mikroskopkamera nach dieser Fokusveränderung aufnehmen, so würde die Mikroskopieaufnahme eine verringerte Bildschärfe aufweisen. Die Auswerteeinheit 29 ist dazu ausgebildet, als Autofokuswert eine rechnerische Verschiebung zwischen dem von dem Liniendetektor 4 aufgrund des reflektierten Lichtmusters 28 detektierten Intensitätsprofil und dem im Rahmen der Referenzmessung detektierten Referenz-Intensitätsprofil zu ermitteln, bei der ein über einen Bereich des Liniendetektors 4 summiertes Abweichungsmaß der beiden Intensitätsprofile voneinander minimal ist.

Figur 4b zeigt mehrere in dem ersten Ausführungsbeispiel mit dem Liniendetektor 4 detektierte Intensitätsprofile bei unterschiedlichen Wells, deren unterschiedliche Position in der Mikroplatte zu unterschiedlichen Abständen zwischen dem Objektiv 15 und der ersten reflektierenden Grenzschicht des jeweiligen Wells führt. Anhand dieser Figur 4b wird nochmals deutlich, dass sich die Position der detektierten Intensitätsprofile entlang der x-Achse des Intensitätsprofils in Abhängigkeit von dem Abstand zwischen dem Objektiv 15 und dem Objektträger verändert.

Wie bereits erläutert, zeigt Figur 5a ein Intensitätsprofil von einem Objektträger, dessen Dicke nicht vernachlässigbar ist. Es handelt sich hierbei um eine Mikroplatte aus Kunststoff mit insgesamt 96 Wells. Der Peak bei etwa Pixelnummer 36 rührt von Reflexion an der Grenzschicht Luft/Kunststoff der Bodenunterseite des Wells. Der Peak bei Pixelnummer 58 stammt von Reflexion an der Grenzschicht Kunststoff/Medium oberhalb des Bodens des Wells. Abstand von Pixelnummer 36 zu 58 entspricht somit etwa der Dicke des Bodens des Wells. Der Peak bei etwa Pixelnummer 43 ist keiner Grenzschicht zugeordnet, sondern rührt von Reflexionen aus dem Kunststoff des Bodens des Wells. Das zu untersuchende Objekt liegt typischerweise am Boden des Wells, oberhalb Grenzschicht Kunststoff/Medium, d.h. oberhalb von Pixelnummer 58.

In Figur 5b sind zu dem Intensitätsprofil aus Figur 5a (durchgezogene Linie) zwei weitere Intensitätsprofile dargestellt, nämlich ein zuvor aufgenommenes Referenz-Intensitätsprofil (punktierte Linie) und ein gegenüber Figur 5a rechnerisch verschobenes Intensitätsprofil (gestrichelte Linie).

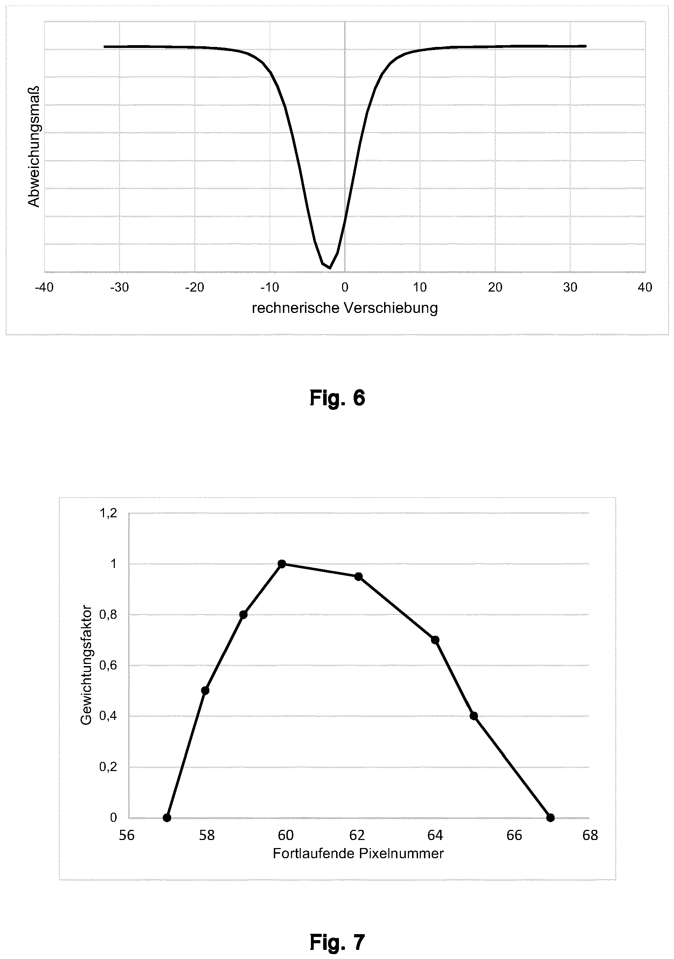

Figur 6 zeigt das summierte Abweichungsmaß als Funktion der rechnerischen Verschiebung des detektierten Intensitätsprofils gegenüber dem Referenz-Intensitätsprofil. Zur Bestimmung des summierten Abweichungsmaßes wird pixelweise für unterschiedliche rechnerische Verschiebungen jeweils die quadratische Summe der Abweichungen zwischen dem aufgrund des reflektierten Lichtmusters 28 detektierten Intensitätsprofils und dem im Rahmen der Referenz-messung detektierten Referenz-Intensitätsprofils gebildet und gegen die Verschiebung aufgetragen. Die rechnerische Verschiebung ist durch geeignete, im einfachsten Fall durch lineare Interpolation der Intensitätsprofile auch mit der Auflösung von Bruchteilen eines Pixels errechenbar. Als Autofokuswert wird die rechnerische Verschiebung, d. h. der x-Wert entlang der x-Achse bestimmt, bei dem das Abweichungsmaß das Minimum aufweist. Im vorliegenden Ausführungsbeispiel liegt das Minimum bei einer Verschiebung von -2. Auch der Autofokuswert kann mit erhöhter Genauigkeit mittels quadratischer Interpolation bestimmt werden. Dieser Autofokuswert dient als Steuersignal zur Fokuseinstellung. In dem ersten Ausführungsbeispiel des erfindungsgemäßen Autofokussystems 1 gibt das Vorzeichen des Autofokuswerts, das im vorliegenden Beispiel negativ ist, eine Verstellrichtung für den Antrieb 18 vor. Mit diesem Antrieb 18 wird das Objektiv 15 dann in die erforderliche Richtung bewegt, um die Fokuseinstellung vorzunehmen. Die Verstellrichtung ergibt sich durch Wahl der Richtung der Pixelnummerierung.

Bei der Ermittlung des Autofokuswerts als Verschiebung zwischen dem gemessenen Intensitätsprofil und dem Referenzintensitätsprofil kommt zusätzlich eine Gewichtungsfunktion zum Einsatz, die bestimmte Bereiche des Spektrums stärker gewichtet als andere. Da das zu untersuchende Objekt wie erläutert am Boden des Wells, oberhalb Grenzschicht Kunststoff/Medium, d.h. oberhalb von Pixelnummer 58 liegt, hat die in Fig. 7 gezeigte Gewichtungsfunktion bei etwa Pixel 61 ein Maximum und betont somit die abfallende Flanke des Referenzintensitätsprofils.

Figur 7 zeigt die Gewichtungsfaktoren als Funktion der Pixelnummer des Liniendetektors 4. Mit dieser Gewichtungsfunktion werden einzelne Summanden des summierten Abweichungsmaßes multipliziert, die näher an einer rechnerischen Verschiebung liegen, die einem nominalen Fokuspunkt des Objektivs 15 auf einer Grenzfläche des Objektträgers 14 entspricht.

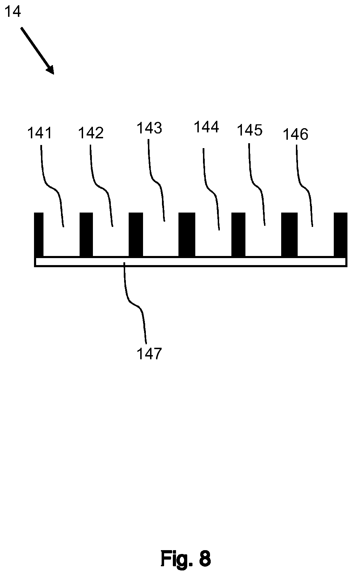

Figur 8 zeigt eine schematische Darstellung eines Objektträgers 14 in Seitenansicht, der als Mikroplatte ausgebildet ist. Diese Mikroplatte weist sechs Wells bzw. Kavitäten 141,142,143,144,145,146 auf. In jedem dieser Wells 141,142,143,144,145,146 kann beispielsweise eine biologische Probe in einem wässrigen Medium eingebracht werden, wobei jedes Well 141,142,143,144, 145,146 als Reservoir für das wässrige Medium dient. Die Mikroplatte umfasst einen Boden 147 aus lichtdurchlässigem Kunststoff. Produktionsbedingt weist dieser Boden 147 der Mikroplatte Unebenheiten auf. Werden im Rahmen einer Langzeitmessung nicht nur von einem, sondern von allen Wells 141,142,143,144,145,146 nacheinander Mikroskopieaufnahmen bei einer vorgegebenen Fokuseinstellung aufgenommen, jedoch die Referenzmessung nur an einem ersten Well 141 durchgeführt, so führen diese Unebenheiten bei den weiteren Well 142,143,144,145,146 zu einer geringeren Bildschärfe der von dem jeweiligen Well aufgenommenen Mikroskopieaufnahme. Um dies zu verhindern, wird beim Wechseln zwischen den Wells 141,142,143,144,145,146 und einer darauffolgenden Mikroskopieaufnahme des jeweiligen Wells mit dem in Figur 1 beschriebenen ersten Ausführungsbeispiel des erfindungsgemäßen Autofokussystems 1 der Abstand zwischen dem Objektiv 15 und der Mikroplatte 14 anhand des Autofokuswertes derart eingestellt, dass die Bildschärfe für Mikroskopieaufnahmen in jedem Well 141,142,143,144,145,146 der Mikroplatte 14 hoch ist. Mittels der Auswerteeinheit 29 können dadurch nicht nur Mikroskopieaufnahmen mit einer hohen Bildschärfe erreicht werden, sondern auch die Unebenheit des Bodens 147 der Mikroplatte ermittelt werden.

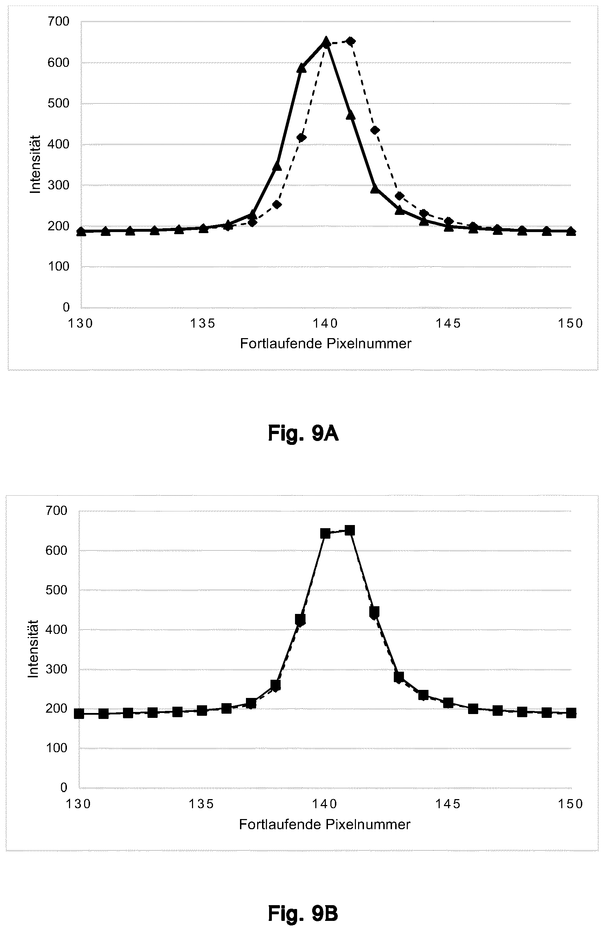

Figur 9A zeigt ein in dem ersten Ausführungsbeispiel des Autofokussystems mit dem Liniendetektor 4 detektiertes Referenz-Intensitätsprofil von dem ersten Well 141 (gestrichelte Linie mit Rauten) und ein detektiertes Intensitätsprofil von einem zweiten Well 142 (durchgezogene Linie mit Dreiecken). Um von jedem Well 141,142,143,144,145,146 ein Intensitätsprofil ermitteln zu können, ist der Objektträger entlang der x-Achse 21 und der y-Achse 22 bewegbar. Das Referenz-Intensitätsprofil wurde aus einer Referenzmessung erhalten, die nach einer manuellen Fokussierung durchgeführt wurde. Wie aus Figur 9A ersichtlich ist, ist das detektierte Intensitätsprofil gegenüber dem Referenz-Intensitätsprofil entlang der x-Achse nach links verschoben. Diese Verschiebung resultiert aus der Fokusveränderung, bei der sich der Abstand zwischen dem Objektiv 15 des Mikroskops 2 und dem Objektträger 14 gegenüber einer optimalen Fokuseinstellung aufgrund der Unebenheit des Bodens 147 der Mikroplatte 14 verändert hat. Würde der Benutzer eine Mikroskopieaufnahme nach dieser Fokusveränderung mit der Mikroskopkamera aufnehmen, so würde die Mikroskopieaufnahme eine verringerte Bildschärfe aufweisen.

Figur 9B zeigt das in Figur 9A mit dem Liniendetektor 4 detektierte Referenz-Intensitätsprofil von dem erstem Well 141 (gestrichelte Linie mit Rauten) und ein detektiertes Intensitätsprofil von dem zweiten Well 142 nach der Fokuseinstellung (durchgezogene Linie mit Dreiecken). Nach der Fokuseinstellung überlagern sich die beiden Intensitätsprofile annähernd vollständig.

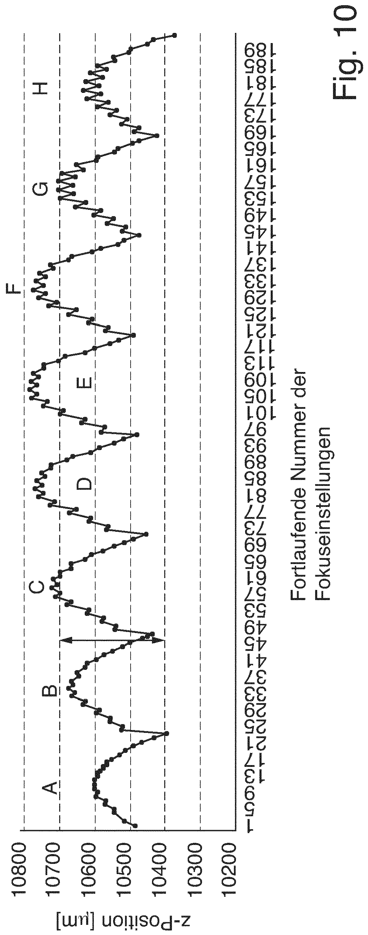

Figur 10 zeigt die relative Z-Position des Objektivs 15 in Mikrometer [Abk.: µm] als Funktion der fortlaufenden Nummer der Fokuseinstellungen für 96 Wells einer Mikroplatte 14. Die 96 Wells sind in acht Reihen A, B, C, D, E, F, G, H mit jeweils zwölf Wells auf der Mikroplatte 14 angeordnet. In einer Referenzmessung an einem ersten Well A1 wurde die Fokuseinstellung mittels der manuellen Fokuseinstellung durchgeführt. Danach wurde die Mikroplatte 14 entlang der x-Achse 21 derart bewegt, dass sich ein zweites Well A2 in dem Strahlengang 13 des Mikroskops 2 befindet. Dort wurde aufgrund einer durch die Unebenheit des Bodens 147 der Mikroplatte 14 verursachten Fokusänderung das zuvor erläuterte Verfahren zur Fokuseinstellung mittels des ersten Ausführungsbeispiels des Autofokussystems 1 in zwei Schritten durchgeführt, um die Genauigkeit der Fokuseinstellung an der Position des Wells A2 zu optimieren. In dem ersten Schritt wurde der Autofokuswert in iterativer Annäherung erreicht und die Z-Position ermittelt; im zweiten Schritt wurde zusätzlich die Gewichtungsfunktion bei der Ermittlung des Autofokuswertes verwendet, was zu einer geringfügigen Verringerung der Z-Position führt. Danach wurde schrittweise in jedem Well A3 bis H12 das Verfahren zur Fokuseinstellung in den genannten zwei Schritten wiederholt. Somit zeigt Figur 10 die relative Z-Position des Objektivs 15 für 191 Fokuseinstellungen in 96 Wells. Aufgrund des Kurvenverlaufs der relativen Z-Position lässt sich ableiten, dass die Mikroplatte 14 einen in Richtung der Wells A1 bis H12 gewölbten und daher konvex ausgebildeten Boden 147 aufweist.

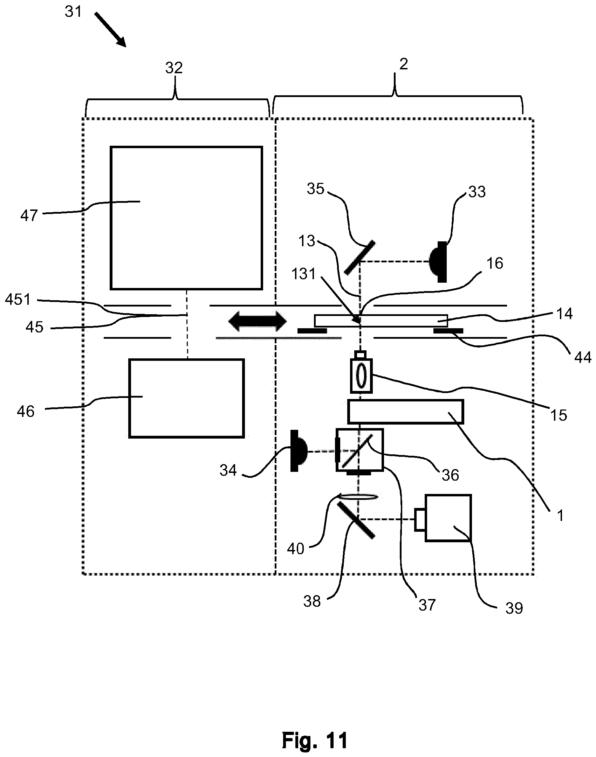

Figur 11 zeigt ein optisches Messsystem 31, dass das Mikroskop 2 mit einem zweiten Ausführungsbeispiel des erfindungsgemäßen Autofokussystems 1 und einem Mikroplatten-Lesegerät 32 umfasst. Das zweite Ausführungsbeispiel unterscheidet sich von dem ersten Ausführungsbeispiel des erfindungsgemäßen Autofokussystems 1 nur dadurch, dass es in ein Gehäuse des optischen Messsystems 31 integriert ist. Das Mikroskop 2 umfasst eine erste Mikroskopstrahlungsquelle 33 zur Durchlichtbeleuchtung und eine zweite Mikroskopstrahlungsquelle 34 zur Auflichtbeleuchtung und zur Anregungsbeleuchtung. Zwischen der ersten Mikroskopstrahlungsquelle 33 und dem Objektträger 14 ist ein erster Spiegel 35 angeordnet, der die Strahlung der ersten Mikroskopstrahlungsquelle 33 durch den Objektträger 14 hindurch und zum Objektiv 15 leitet. Die von der zweiten Mikroskopstrahlungsquelle 34 erzeugte Strahlung wird von einem zweiten dichroitischen oder teildurchlässigen Spiegel 36, der in einem Filterwürfel 37 integriert ist, in den Strahlungsgang 13 des Mikroskops 2 eingekoppelt, durch das Objektiv 15 zum Objektträger 14 geleitet und durchdringt die Unterseite des Objektträgers 14. Zweckmäßig wird die darauf aufgebrachte Probe 16 zur Aufsicht beleuchtet oder zur Fluoreszenz angeregt. Die reflektierte ggf. fluoreszierende Strahlung (sog. Reflex-Betrieb) wird mittels eines zweiten Spiegels 38, der im Strahlengang 13 des Mikroskops 2 in Strahlungsrichtung der reflektierten/Fluoreszenz-Strahlung hinter dem Filterwürfel 37 angeordnet ist, zu einer Mikroskopkamera 39 geleitet. Zwischen dem Filterwürfel 37 und dem zweiten Spiegel 38 ist eine Tubuslinse 40 angeordnet. Die erste Mikroskopstrahlungsquelle 33 und die zweite Mikroskopstrahlungsquelle 34 sind jeweils auf zwei sich gegenüberliegenden Seiten des Objektträgers 14 im Mikroskop 2 angeordnet.

Das optische Messsystem 31 weist eine automatische Transportvorrichtung 44 auf, mit dem der Objektträger 14 zwischen einer ersten Objektträgerposition 131 in dem Strahlengang 13 des Mikroskops 2 und einer zweiten Objektträgerposition 451 in einem Strahlengang 45 des Mikroplatten-Lesegeräts 32 hin und her bewegt werden kann. Der in Figur 9 dargestellte Doppelpfeil zeigt die Bewegungsrichtung der Transportvorrichtung 44 an. Dadurch kann zunächst eine Mikroskopieaufnahme von der Probe 16 auf dem Objektträger 14 aufgenommen werden und danach der Objektträger 14 von dem Strahlengang 13 des Mikroskops 2 zum Strahlengang 45 des Mikroplatten-Lesegeräts 32 bewegt werden. Als Objektträger 14 wird eine Mikroplatte verwendet. Dadurch kann der Benutzer sowohl Mikroskopieaufnahmen mit dem Mikroskop 2 aufnehmen als auch Messungen mit dem Mikroplatten-Lesegerät 32 durchführen, ohne hierbei den Objektträger 14 zwischen dem Mikroskop 2 und dem Mikroplatten-Lesegerät 32 händisch hin und her tragen zu müssen. Das im Mikroskop 2 integrierte Autofokussystem 1 ermöglicht zudem eine automatische Fokuseinstellung vor jeder Mikroskopieaufnahme. Das Mikroplatten-Lesegerät 32 weist einen ersten Lesegerätdetektor 46 und einen zweiten Lesegerätdetektor 47 auf, wobei der erste Lesegerätdetektor 46 unterhalb der zweiten Objektträgerposition 451 und der zweite Lesegerätdetektor 47 oberhalb der der zweiten Objektträgerposition 451 angeordnet sind. Im Bereich der Lesegerätdetektoren 46, 47 sind auch Messstrahlungsquellen des Mikroplatten-Lesegeräts 32 angeordnet.

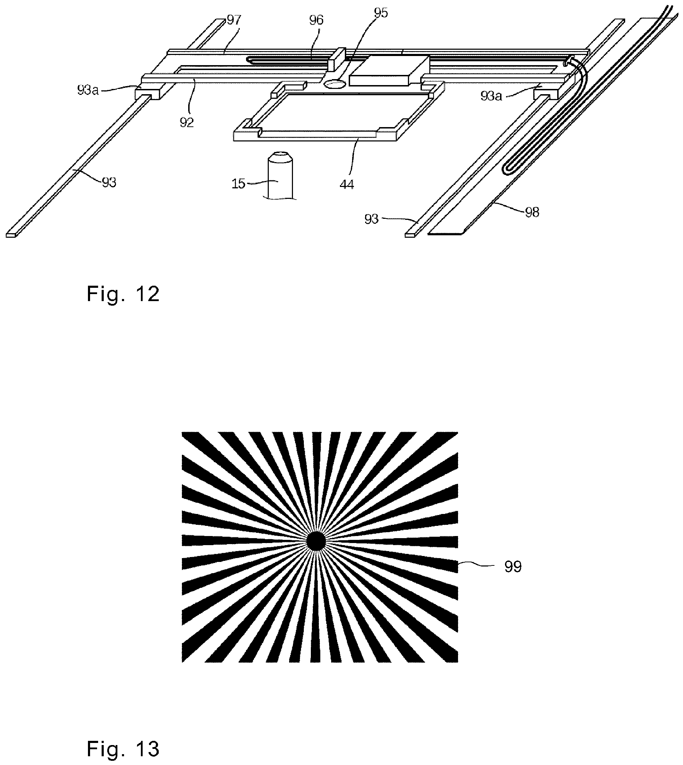

Ein Teil der Komponenten eines Mikroplatten-Lesegerätes mit Mikroskop sind in Figur 12 beispielhaft dargestellt. Das Gerät umfasst eine Aufnahmevorrichtung 44 zur Aufnahme einer Mikroplatte, die als Probenträger dient. Die Aufnahme 44 wird im Folgenden als Plattenträger bezeichnet. Sie nimmt einen Mikroplatte an ihrem Rand auf und sichert diese an den Ecken gegen seitliches Verrutschen. Hierbei können auch zusätzliche, in Figur 12 nicht gezeigte Haltemittel wie etwa eine Feder oder ein Federmechanismus vorgesehen sein, der die Mikroplatte in dem Plattenträger 44 zusätzlich sichert.

Der Plattenträger 44 ist an einem in X-Richtung linear beweglichen Schlitten 92a einer Linearführung 92 gehalten. Die Linearführung 92 ist wiederum über zwei in Y-Richtung linear bewegliche Schlitten 93a an zwei seitlichen Linearführungen 93 befestigt. Über die Linearführungen 92, 93 ist der Plattenträger 44 und mit ihm eine darin aufgenommene Mikroplatte in X und Y-Richtung frei positionierbar. Unterhalb des Plattenträgers 44 ist ein Objektiv 15 angeordnet.

Zur Durchführung einer Bildaufnahme bzw. Messung wird über das von den Linearführungen 92, 93 gebildete Positioniersystem die Mikroplatte so bewegt, dass sich die einzelnen Wells der Mikroplatte nacheinander an der von dem Erfassungsbereich des Objektives 15 definierten Messposition befinden. Die Messposition ist in Figur 12 definiert durch die Achse des Objektives 15, mit dem von unten die optische Strahlung senkrecht zur Mikroplatte aufgenommen wird.

An der zum Schlitten 92a weisenden Seite des Plattenträgers 44 befindet sich eine Bohrung 95, ggf. mit stufenartiger Senkung, welche zur Aufnahme einer transparenten Musterplatte dient. Die Musterplatte besteht aus ebenen Quarzglas geringer Dicke mit einem dauerhaft aufgebrachten Muster, typischerweise eine Strichplatte, die zur Einstellung der Bildschärfe geeignet ist und vorteilhaft auch das Auflösungsvermögen und die laterale Positionstreue bestimmen lässt.

Die Bohrung 95 kann mittels der Bewegung von Plattenträger 44 über das Objektiv 15 verfahren werden, um in die Messposition zu gelangen.

Die Musterplatte kann in der Senkung eingeklebt oder durch weitere Mittel fest positioniert werden. Vorteilhaft kann eine Senkung zur Auflage der Musterplatte so in der Höhe (Tiefe der Senkung) gewählt werden, dass das Testmuster der Musterplatte in selben Höhe liegt wie das zu untersuchende Objekt in einer (typischen) Mikroplatte. Dabei wird der typische Abstand von Probenlage zu Mikroplatten-Auflage im Bereich von wenigen Millimetern und darunter kompensiert, um die Probe und das Muster bei Wahl einer typischen Mikroplatte annähernd auf gleichem Abstand zum Objektiv 15 zu haben.

In Figur 13 ist eine Musterplatte 99 mit einem beispielhaften Testmuster dargestellt. Es handelt sich hierbei um einen sogenannten Siemensstern, der auf einer Glasplatte aufgebracht ist. Anhand des Gesamtbildes kann die Bildschärfe ermittelt werden. Detaillierte Analysen in bekannter Art erlauben die Bestimmung des Auflösungsvermögens des optischen Systems.

Das Testmuster 99 dient zur Rekalibrierung des hardwarebasierten Autofokussystems. Hierzu wird das Testmuster 99 in den Strahlengang unter dem Objektiv 15 positioniert und durch bildbasierte Fokusseinstellung eine neue Z-Position gesucht, in der ein scharfes Bild des Testmusters erhalten wird. Diese Z-Position der bildbasierten Fokusermittlung hat einen fixen Abstand zu der benutzervorgegebenen Z-Position, in der zuvor die Referenzmessung für die hardware-basierte Fokuseinstellung durchgeführt wurde. Dieser Abstand ergibt sich rein mechanisch durch Plattenträger und Mikroplatte. Es zeigt sich, dass dieser Abstand in dem Aufwärmprozess und in anderen Prozessen, die den Autofokus nachteilig beeinflussen, d.h. in der Regel nicht vom Autofokus korrigiert werden können, unverändert bleibt. Zu den nachteiligen Beeinflussungen zählen insbesondere Veränderungen in dem Teil des Lichtweges, der nicht vom Autofokuslichtstrahl 5 durchlaufen wird. Dies betrifft insbesondere den Lichtweg unterhalb des Strahlteilers 11 zu der Kamera.

Die Differenz zwischen der eingelernten Z-Position, in der die Referenzmessung durchgeführt wurde und der mittels bildbasierter Autofokuseinstellung ermittelten Z-Position kann im Aufwärmprozess genutzt werden, um eine automatisierte Rekalibrierung vorzunehmen.

Das Re-Kalibrieren kann z.B. in zeitlichen Abständen erfolgen, die dem Aufwärmprozess entsprechend gewählt sind, z.B. in den aufeinanderfolgenden Abständen von 2, 3, 5, 8, 13, 21, 34, 45, 79, etc. Minuten.

Der Prozess der Rekalibrierung funktioniert wie folgt: mittels bildbasierter Fokusbestimmung wird für das Testmuster ein neuer Fokuspunkt ermittelt und führt zu einer typischerweise geänderten Z-Position. Mit dem eingangs ermittelten Abstand zwischen dem Fokuspunkt für das Testmuster und der benutzervorgegebenen Z-Position, bei der die ursprüngliche Referenzmessung durchgeführt wurde, kann von der neuen Z-Position für den Fokuspunkt des Testmusters auf eine neue Z-Position gerechnet werden, an der eine neue Referenzmessung (Z-Position und Intensitätsprofil) aufgenommen wird, die bis zu einer weiteren nachfolgenden Rekalibrierung für das hardwarebasierte Autofokussystem benutzt wird.

Auf diesem Wege werden mit dem Intensitätsdetektor 4 in vorgegebenen Zeitabständen jeweils neue Referenzmuster für die nachfolgende, viel schnellere hardwarebasierte Ermittlung des Autofokuswertes ermittelt und lösen einander ab. Die bildbasierte Ermittlung der Fokuseinstellung ist aufgrund der gewählten Qualität und Langlebigkeit des Testmusters besonders robust, d.h. wenig fehleranfällig. Außerdem gestattet das Testmuster viele weitere Qualitätsüberprüfungen, auch quantitativer Natur, in allen Bereichen des Betriebes und des Lebenszyklus des Instruments.

## Patentansprüche

1. Autofokussystem (1) für eine optische Mess- oder Mikroskopievorrichtung, bei der zur Fokuseinstellung ein Abstand zwischen einer optischen Abbildungseinheit (15) der optischen Mess- oder Mikroskopievorrichtung (2), insbesondere einem Objektiv, und einem Objektträger (14) einstellbar ist,
wobei das Autofokussystem (1) eine Autofokuslichtquelle (3) und einen in zumindest einer Richtung ortsauflösenden Intensitätsdetektor (4) aufweist, insbesondere einen Zeilendetektor,
wobei die Autofokuslichtquelle (3) einen Autofokuslichtstrahl (5) erzeugt, der derart in den Strahlengang (13) der optischen Mess- oder Mikroskopievorrichtung (2) eingekoppelt ist, dass der Autofokuslichtstrahl (5) durch die optische Abbildungseinheit (15) auf den Objektträger (14) fällt und dort einen Lichtfleck (17) erzeugt, und wobei der Intensitätsdetektor (4) derart angeordnet ist, dass auf diesen ein von dem Objektträger (14) reflektierter und in Rückrichtung aus dem Strahlengang (13) der optischen Mess- oder Mikroskopievorrichtung (2) ausgekoppelter Lichtanteil (23) des Autofokuslichtstrahls (5) trifft und dort ein reflektiertes Lichtmuster (28) erzeugt, und
wobei das Autofokussystem (1) eine mit dem Intensitätsdetektor (4) verbundene Auswerteeinheit (29) aufweist, die aus einer Verschiebung des reflektierten Lichtmusters (28) gegenüber einem mittels einer Referenzmessung ermittelten Referenzmuster einen Autofokuswert erzeugt, welcher als Steuersignal zur Fokuseinstellung dient,
**dadurch gekennzeichnet, dass**
die Auswerteeinheit (29) ausgebildet ist, als Autofokuswert eine rechnerische Verschiebung zwischen einem von dem Intensitätsdetektor (4) aufgrund des reflektierten Lichtmusters (28) detektierten Intensitätsprofil und einem im Rahmen der Referenzmessung detektierten Referenz-Intensitätsprofil zu ermitteln, bei der ein über mindestens einen Bereich des Intensitätsdetektors (4) summiertes Abweichungsmaß der beiden Intensitätsprofile voneinander minimal ist.

2. Autofokussystem (1) nach Anspruch 1, bei dem die Auswerteeinheit (29) ausgebildet ist, eine Distanzfunktion zwischen dem detektierten Intensitätsprofil und dem Referenz-Intensitätsprofil in Abhängigkeit der rechnerischen Verschiebung der beiden Intensitätsprofile gegeneinander zu berechnen, und den Autofokuswert als die rechnerische Verschiebung zu ermitteln, bei der die Distanzfunktion ein Minimum aufweist,
wobei die Distanzfunktion als das über zumindest einen Bereich der Detektorfläche summierte Abweichungsmaß der beiden Intensitätsprofile voneinander bei unterschiedlicher rechnerischer Verschiebung der Intensitätsprofile gegeneinander berechnet wird.

3. Autofokussystem (1) nach Anspruch 1 oder 2, bei dem die Auswerteeinheit (29) ausgebildet ist, das Abweichungsmaß als eine Minkowski-Distanz, insbesondere eine Euklidische Distanz zwischen korrespondierenden Intensitätswerten der beiden Intensitätsprofile zu bilden.

4. Autofokussystem (1) nach einem der vorangehenden Ansprüche, bei dem die Auswerteeinheit (29) ausgebildet ist, die einzelnen Summanden des summierten Abweichungsmaßes mit einer Gewichtungsfunktion zu multiplizieren.

5. Autofokussystem (1) nach Anspruch 4, bei dem die Auswerteeinheit (29) ausgebildet ist, mittels der Gewichtungsfunktion solche Summanden stärker zu gewichten, die näher an einer rechnerischen Verschiebung liegen, die einem nominalen Fokuspunkt der optischen Abbildungseinheit (15) auf einer Grenzfläche des Objektträgers (14) entspricht, insbesondere bei dem die Gewichtungsfunktion ein Maximum im Bereich einer Verschiebung aufweist, die dem nominalen Fokuspunkt entspricht.

6. Autofokussystem (1) nach einem der vorangehenden Ansprüche, bei dem der Intensitätsdetektor (4) aus diskreten Detektorpixeln (41, 42, 43) aufgebaut ist und die rechnerische Verschiebung der beiden Intensitätsprofile gegeneinander durch die Auswerteeinheit (29) pixelweise erfolgt.

7. Autofokussystem (1) nach einem der vorangehenden Ansprüche, bei dem die Ein- und Auskopplung des Autofokuslichtstrahls (5, 23) über einen dichroitischen Spiegel (11) oder eine Kombination aus einem Strahlteiler und einem Filter erfolgt.

8. Autofokussystem (1) nach einem der vorangehenden Ansprüche, bei dem im Strahlengang (13) der Autofokuslichtquelle (3) ein weiterer Strahlteiler (12) angeordnet ist und sich zwischen der Autofokuslichtquelle (3) und dem weiteren Strahlteiler (12) ein erstes Abschirmelement (10) befindet, welches einen ersten Teilbereich (51) des Autofokuslichtstrahls (5) ausblendet, und sich zwischen dem weiteren Strahlteiler (12) und dem Intensitätsdetektor (4) ein zweites Abschirmelement (26) befindet, welches einen zweiten, zu dem ersten Teilbereich (51) komplementären Teilbereich des reflektierten Lichtanteils (23) des Autofokuslichtstrahls (5) ausblendet.

9. Autofokussystem (1) nach einem der vorangehenden Ansprüche, bei dem die Auswerteeinheit (29) ausgebildet ist, die Referenzmessung aufgrund
- einer manuellen Fokussierung durch einen Benutzer,
- einer automatischen Fokussierung unter Verwendung einer bildbasierten Autofokusberechnung,
- einer automatischen Fokussierung unter Verwendung einer von dem Autofokussystem separaten, hardwarebasierten Autofokuseinrichtung oder
- einer Kombination hiervon
durchzuführen.

10. Autofokussystem (1) nach einem der vorangehenden Ansprüche, bei dem die Auswerteeinheit (29) ausgebildet ist, für die Referenzmessung einen Abstand zwischen der optischen Abbildungseinheit (15) und dem Objektträger (14) anhand eines Zählergebnisses einer manuellen oder automatischen Zählung von Objekten im Betrachtungsbereich der optischen Mess- oder Mikroskopievorrichtung vorzugeben.

11. Autofokussystem (1) nach einem der vorangehenden Ansprüche, mit einer Bildanalyseeinheit zur Analyse von Mikroskopieaufnahmen der optischen Mikroskopievorrichtung (2),
wobei die Auswerteeinheit (29) ausgebildet ist, für die Referenzmessung den Abstand zwischen der optischen Abbildungseinheit (15) und dem Objektträger (14) derart vorzugeben, dass ein Bildanalyseergebnis einer ersten Mikroskopieaufnahme einer Probe unter Anwendung einer ersten Mikroskopie-Methode in Übereinstimmung mit einem Bildanalyseergebnis einer zweiten Mikroskopieaufnahme derselben Probe unter Anwendung einer zweiten Mikroskopie-Methode gebracht wird, wobei zumindest eine der Mikroskopie-Methoden die optische Abbildungseinheit (15) verwendet.

12. Autofokussystem (1) nach einem der vorangehenden Ansprüche, mit einem Antrieb (18) zum Einstellen des Abstandes zwischen dem optischen Abbildungssystem (15) und dem Objektträger (14) und mit einer Steuereinheit (30) zur Ansteuerung des Antriebs (18) aufgrund des Autofokuswerts.

13. Autofokussystem (1) nach Anspruch 12, bei dem die Steuereinheit (30) ausgebildet ist, anhand des Vorzeichens des Autofokuswerts eine Verstellrichtung für den Antrieb (18) vorzugeben.

14. Autofokussystem (1) nach Anspruch 12 oder 13, bei dem die Steuereinheit (30) ausgebildet ist, anhand des Betrages des Autofokuswerts eine Verstellgeschwindigkeit für den Antrieb (18) vorzugeben.

15. Autofokussystem (1) nach Anspruch 12 oder 13, bei dem die Steuereinheit (30) ausgebildet ist, anhand des Autofokuswertes eine absolute Position für den Antrieb (18) vorzugeben.

16. Autofokussystem (1) nach einem der vorangehenden Ansprüche, bei dem die Auswerteeinheit (29) ausgebildet ist, die Bestimmung der Distanzfunktion während einer automatischen Fokuseinstellung iterativ zu wiederholen.

17. Autofokussystem (1) nach einem der vorangehenden Ansprüche, bei der eine mit der Auswerteeinheit zusammenwirkende Speichereinrichtung zur Speicherung ermittelter x,y,z-Positionen vorgesehen ist.

18. Verfahren zur Fokuseinstellung bei einer optischen Mess- oder Mikroskopievorrichtung, insbesondere bei einem Mikroskop (2) oder einen Mikroplatten-Lesegerät (32), das mit einem Autofokussystem (1) nach zumindest einem der vorangegangenen Ansprüche durchführbar ist,
bei dem ein Autofokuslichtstrahl (5) einer Autofokuslichtquelle (3) in einen Strahlengang (13) des optischen Messsystems (2) eingekoppelt und in Richtung eines Objektträgers (14) geleitet wird,
wobei der eingekoppelte Autofokuslichtstrahl beim Auftreffen auf den Objektträger (14) einen Lichtfleck auf dem Objektträger (14) erzeugt und an zumindest einer reflektierenden Grenzfläche des Objektträgers (14) reflektiert wird,
wobei ein Lichtanteil (23) des reflektierten Autofokuslichtstrahls (5) in Rückrichtung aus dem Strahlengang (13) des optischen Messsystems (2) ausgekoppelt und in Richtung eines in zumindest einer Richtung ortsauflösenden Intensitätsdetektors (4) geleitet wird, wodurch an dem Intensitätsdetektor (4) ein reflektiertes Lichtmuster (28) erzeugt wird,
wobei ein Autofokuswert anhand einer rechnerischen Verschiebung eines von dem Intensitätsdetektor (4) aufgrund des reflektierten Lichtmusters (28) detektierten Intensitätsprofils und eines im Rahmen einer Referenzmessung detektierten Referenz-Intensitätsprofils ermittelt wird, bei welcher Verschiebung ein über mindestens einen Bereich des Intensitätsdetektors (4) summiertes Abweichungsmaß der beiden Intensitätsprofile voneinander minimal ist, und
eine Fokuseinstellung mittels des als Steuersignal dienenden Autofokuswertes durchgeführt wird.

19. Optisches Mess- und Mikroskopiesystem (31) umfassend ein Autofokussystem (1) nach einem der Ansprüche 1 bis 17, ein Mikroskop (2), ein Mikroplatten-Lesegerät (32) sowie eine Transportvorrichtung (44), wobei die Transportvorrichtung (44) dazu ausgebildet ist, einen Objektträger (14) zwischen einer ersten Objektträgerposition (131) in einem Strahlengang (13) des Mikroskops (2) und einer zweiten Objektträgerposition (451) in einem Strahlengang (45) des Mikroplatten-Lesegeräts (32) hin- und her zu bewegen.

20. Autofokussystem (1) nach einem der Ansprüche 1 bis 17, bei dem die Auswerteeinheit (29) ausgebildet ist, eine weitere Referenzmessung durchzuführen, indem ein auf dem Objektträger (14) oder einem dem Objektträger (14) zugeordneten Trägersystem angeordnetes Testmuster in den Strahlengang (13) gebracht und eine automatische Fokussierung auf das Testmuster unter Verwendung einer bildbasierten Autofokusberechnung durchgeführt wird, und anschließend unter Verwendung eines mit Hilfe der bildbasierten Autofokusberechnung aufgefundenen Fokuspunktes ein neues Referenzmuster am Objekt ermittelt wird, insbesondere, bei dem zu dem neu aufgefundenen Fokuspunkt ein bekannter Abstand zwischen dem vormals fokussierten Objekt und dem Testmuster addiert wird.

## Claims

1. Autofocus system (1) for an optical measuring or microscopy device, in which a distance between an optical imaging unit (15) of the optical measuring or microscopy device (2), in particular a lens, and a specimen slide (14) is adjustable for focus adjustment,
wherein the autofocus system (1) has an autofocus light source (3) and an intensity detector (4) that is spatially resolving in at least one direction, in particular a line detector,
wherein the autofocus light source (3) generates an autofocus light beam (5) that is coupled into the beam path (13) of the optical measuring or microscopy device (2) in such a way that the autofocus light beam (5) is incident through the optical imaging unit (15) onto the specimen slide (14) and generates a light spot (17) there, and wherein the intensity detector (4) is arranged in such a way that a light portion (23) of the autofocus light beam (5), which is reflected by the specimen slide (14) and coupled out of the beam path (13) of the optical measuring or microscopy device (2) in the return direction, is incident onto the intensity detector and generates a reflected light pattern (28) there, and
wherein the autofocus system (1) has an evaluation unit (29) connected to the intensity detector (4), which generates from a displacement of the reflected light pattern (28) compared to a reference pattern determined by means of a reference measurement an autofocus value, which serves as a control signal for focus adjustment,
**characterized in that**
the evaluation unit (29) is designed to determine as an autofocus value a calculated displacement between an intensity profile detected by the intensity detector (4) based on the reflected light pattern (28) and a reference intensity profile detected as part of the reference measurement, in which a deviation measure of the two intensity profiles from each other summed over at least one area of the intensity detector (4) is minimal.

2. Autofocus system (1) according to claim 1, in which the evaluation unit (29) is designed to calculate a distance function between the detected intensity profile and the reference intensity profile depending on the calculated displacement of the two intensity profiles against each other and to determine the autofocus value as the calculated displacement at which the distance function has a minimum,
wherein the distance function is calculated as the deviation measure of the two intensity profiles from each other summed over at least one area of the detector surface with different calculated displacement of the intensity profiles against each other.

3. Autofocus system (1) according to claim 1 or 2, in which the evaluation unit (29) is designed to form the deviation measure as a Minkowski distance, in particular an Euclidean distance, between corresponding intensity values of the two intensity profiles.

4. Autofocus system (1) according to any one of the preceding claims, in which the evaluation unit (29) is designed to multiply the individual summands of the summed deviation measure by a weighting function.

5. Autofocus system (1) according to claim 4, in which the evaluation unit (29) is designed to give more weight to those summands that are closer to a calculated displacement that corresponds to a nominal focus point of the optical imaging unit (15) on a boundary surface of the specimen slide (14) by means of the weighting function, in particular in which the weighting function has a maximum in the area of a displacement that corresponds to the nominal focus point.

6. Autofocus system (1) according to any one of the preceding claims, in which the intensity detector (4) is composed of discrete detector pixels (41, 42, 43) and the calculated displacement of the two intensity profiles against each other is performed pixel by pixel by the evaluation unit (29).

7. Autofocus system (1) according to any one of the preceding claims, in which the coupling in and coupling out of the autofocus light beam (5, 23) takes place via a dichroic mirror (11) or a combination of a beam splitter and a filter.

8. Autofocus system (1) according to any one of the preceding claims, in which a further beam splitter (12) is arranged in the beam path (13) of the autofocus light source (3), and a first shielding element (10) is located between the autofocus light source (3) and the further beam splitter (12), which blends out a first partial area (51) of the autofocus light beam (5), and a second shielding element (26) is located between the further beam splitter (12) and the intensity detector (4), which blends out a second partial area of the reflected light component (23) of the autofocus light beam (5) that is complementary to the first partial area (51).

9. Autofocus system (1) according to any one of the preceding claims, in which the evaluation unit (29) is designed to perform the reference measurement based on
- a manual focusing by a user,
- an automatic focusing using an image-based autofocus calculation,
- an automatic focusing using a hardware-based autofocus apparatus that is separate from the autofocus system, or
- any combination
thereof.

10. Autofocus system (1) according to any one of the preceding claims, in which the evaluation unit (29) is designed to specify a distance between the optical imaging unit (15) and the specimen slide (14) for the reference measurement on the basis of a counting result of a manual or automatic counting of specimen in the viewing area of the optical measuring or microscopy device.

11. Autofocus system (1) according to any one of the preceding claims, with an image analysis unit for analysing microscopy images of the optical microscopy device (2),
wherein the evaluation unit (29) is designed to specify the distance between the optical imaging unit (15) and the specimen slide (14) for the reference measurement in such a way that an image analysis result of a first microscopy image of a sample by using a first microscopy method is brought into line with an image analysis result of a second microscopy image of the same sample by using a second microscopy method, wherein at least one of the microscopy methods uses the optical imaging unit (15).

12. Autofocus system (1) according to any one of the preceding claims, with a drive (18) for adjusting the distance between the optical imaging system (15) and the specimen slide (14) and with a control unit (30) for controlling the drive (18) based on the autofocus value.

13. Autofocus system (1) according to claim 12, in which the control unit (30) is designed to specify an adjustment direction for the drive (18) on the basis of the sign of the autofocus value.

14. Autofocus system (1) according to claim 12 or 13, in which the controller (30) is designed to specify an adjustment speed for the drive (18) on the basis of the amount of the autofocus value.

15. Autofocus system (1) according to claim 12 or 13, in which the controller (30) is designed to specify an absolute position for the drive (18) on the basis of the autofocus value.

16. Autofocus system (1) according to any one of the preceding claims, in which the evaluation unit (29) is designed to iteratively repeat the determination of the distance function during an automatic focus adjustment.

17. Autofocus system (1) according to any one of the preceding claims, in which a storage apparatus cooperating with the evaluation unit is provided for storing determined x,y,z-positions.

18. Method for focus adjustment in an optical measuring or microscopy device, in particular in a microscope (2) or a microplate reader (32), which can be performed with an autofocus system (1) according to at least one of the preceding claims,
in which an autofocus light beam (5) of an autofocus light source (3) is coupled into a beam path (13) of the optical measuring system (2) and is directed in the direction of a specimen slide (14),
wherein the coupled autofocus light beam generates a light spot on the specimen slide (14) when it is incident onto the specimen slide (14) and is reflected at at least one reflective boundary surface of the specimen slide (14),
wherein a light portion (23) of the reflected autofocus light beam (5) is coupled out of the beam path (13) of the optical measuring system (2) in the return direction and is directed in the direction of an intensity detector (4) that is spatially resolving in at least one direction, whereby a reflected light pattern (28) is generated at the intensity detector (4),
wherein an autofocus value is determined on the basis of a calculated displacement of an intensity profile detected by the intensity detector (4) based on the reflected light pattern (28) and a reference intensity profile detected as part of a reference measurement, at which displacement a deviation measure of the two intensity profiles from each other summed over at least one area of the intensity detector (4) is minimal, and a focus adjustment is performed by means of the autofocus value serving as a control signal.

19. Optical measuring or microscopy system (31), comprising an autofocus system (1) according to any one of claims 1 to 17, a microscope (2), a microplate reader (32) and a transport device (44), wherein the transport device (44) is designed to move a specimen slide (14) back and forth between a first specimen slide position (131) in a beam path (13) of the microscope (2) and a second specimen slide position (451) in a beam path (45) of the microplate reader (32).

20. Autofocus system (1) according to any one of claims 1 to 17, in which the evaluation unit (29) is designed to perform a further reference measurement by bringing a test pattern arranged on the specimen slide (14) or a slide system associated with the specimen slide (14) into the beam path (13) and by performing automatic focusing on the test pattern by using an image-based autofocus calculation, and subsequently by determining a new reference pattern at the specimen by using a focus point found with the aid of the image-based autofocus calculation, in particular, in which a known distance between the previously focused specimen and the test pattern is added to the newly found focus point.

## Revendications

1. Système de mise au point automatique (1) pour un dispositif de mesure ou de microscopie optique, dans lequel une distance entre une unité d'imagerie (15) optique du dispositif de mesure ou de microscopie (2) optique, en particulier un objectif, et un support d'objet (14) est réglable pour le réglage de la mise au point,
dans lequel le système de mise au point automatique (1) présente une source de lumière de mise au point automatique (3) et un détecteur d'intensité (4) à résolution spatiale dans au moins une direction, en particulier un détecteur de ligne,
dans lequel la source de lumière de mise au point automatique (3) génère un faisceau de lumière de mise au point automatique (5) qui est couplé dans le trajet de faisceau (13) du dispositif de mesure ou de microscopie (2) optique de telle manière que le faisceau de lumière de mise au point automatique (5) frappe le support d'objet (14) à travers l'unité d'imagerie (15) optique et y génère une tâche de lumière (17), et dans lequel le détecteur d'intensité (4) est agencé de telle manière qu'une part de lumière (23) réfléchie par le support d'objet (14) et découplée dans la direction de retour du trajet de faisceau (13) du dispositif de mesure ou de microscopie (2) optique du faisceau de lumière de mise au point automatique (5) frappe le détecteur d'intensité et y génère un motif de lumière (28) réfléchi, et
dans lequel le système de mise au point automatique (1) présente une unité d'évaluation (29) reliée au détecteur d'intensité (4) qui génère, à partir d'un déplacement du motif de lumière (28) réfléchi par rapport à un motif de référence déterminé au moyen d'une mesure de référence, une valeur de mise au point automatique qui sert de signal de commande pour le réglage de la mise au point,
**caractérisé en ce que**
l'unité d'évaluation (29) est réalisée afin de déterminer comme valeur de mise au point automatique un déplacement calculé entre un profil d'intensité détecté par le détecteur d'intensité (4) sur la base du motif de lumière (28) réfléchi et un profil d'intensité de référence détecté dans le cadre de la mesure de référence, dans laquelle une mesure d'écart des deux profils d'intensité l'un par rapport à l'autre additionnée sur au moins une zone du détecteur d'intensité (4) est minimale.

2. Système de mise au point automatique (1) selon la revendication 1, dans lequel l'unité d'évaluation (29) est réalisée afin de calculer une fonction de distance entre le profil d'intensité détecté et le profil d'intensité de référence en fonction du déplacement calculé des deux profils d'intensité l'un contre l'autre, et de déterminer la valeur de mise au point automatique comme le déplacement calculé, dans lequel la fonction de distance présente un minimum,
dans lequel la fonction de distance est calculée comme la mesure d'écart des deux profils d'intensité l'un par rapport à l'autre additionnée sur au moins une zone de la surface de détecteur avec un déplacement calculé différent des profils d'intensité l'un contre l'autre.

3. Système de mise au point automatique (1) selon la revendication 1 ou 2, dans lequel l'unité d'évaluation (29) est réalisée afin de former la mesure d'écart comme une distance Minkowski, en particulier une distance euclidienne entre des valeurs d'intensité correspondantes des deux profils d'intensité.

4. Système de mise au point automatique (1) selon l'une quelconque des revendications précédentes, dans lequel l'unité d'évaluation (29) est réalisée afin de multiplier les opérandes individuelles de la mesure d'écart additionnée par une fonction de pondération.

5. Système de mise au point automatique (1) selon la revendication 4, dans lequel l'unité d'évaluation (29) est réalisée afin de pondérer plus fortement au moyen de la fonction de pondération de telles opérandes qui sont plus proches d'un déplacement calculé qui correspond à un point de mise au point nominal de l'unité d'imagerie (15) optique sur une surface limite du support d'objet (14), en particulier dans lequel la fonction de pondération présente un maximum dans la zone d'un déplacement qui correspond au point de mise au point nominal.

6. Système de mise au point automatique (1) selon l'une quelconque des revendications précédentes, dans lequel le détecteur d'intensité (4) est constitué de pixels de détecteur (41, 42, 43) discrets et le déplacement calculé des deux profils d'intensité l'un contre l'autre est effectué par pixels par l'unité d'évaluation (29).

7. Système de mise au point automatique (1) selon l'une quelconque des revendications précédentes, dans lequel le couplage et le découplage du faisceau de lumière de mise au point automatique (5, 23) sont effectués par le biais d'un miroir (11) dichroïque ou d'une combinaison d'un séparateur de faisceau et d'un filtre.

8. Système de mise au point automatique (1) selon l'une quelconque des revendications précédentes, dans lequel un séparateur de faisceau (12) supplémentaire est agencé dans le trajet de faisceau (13) de la source de lumière de mise au point automatique (3) et un premier élément de blindage (10) se trouve entre la source de lumière de mise au point automatique (3) et l'autre séparateur de faisceau (12), élément qui masque une première zone partielle (51) du faisceau de lumière de mise au point automatique (5), un second élément de blindage (26) se trouve entre le séparateur de faisceau (12) supplémentaire et le détecteur d'intensité (4), élément qui masque une seconde zone partielle complémentaire à la première zone partielle (51) de la part de lumière (23) réfléchie du faisceau de lumière de mise au point automatique (5).

9. Système de mise au point automatique (1) selon l'une quelconque des revendications précédentes, dans lequel l'unité d'évaluation (29) est réalisée afin d'exécuter la mesure de référence sur la base
- d'une mise au point manuelle par un utilisateur,
- d'une mise au point automatique en utilisant un calcul de mise au point automatique basé sur l'image,
- d'une mise au point automatique en utilisant un dispositif de mise au point automatique séparé par le système de mise au point automatique, fondé sur le matériel ou
- d'une combinaison de celles-ci.

10. Système de mise au point automatique (1) selon l'une quelconque des revendications précédentes, dans lequel l'unité d'évaluation (29) est réalisée afin de prédéfinir pour la mesure de référence une distance entre l'unité d'imagerie (15) optique et le support d'objet (14) à l'aide d'un résultat de comptage d'un comptage manuel ou automatique d'objets dans la zone d'observation du dispositif de mesure ou de microscopie optique.

11. Système de mise au point automatique (1) selon l'une quelconque des revendications précédentes, avec une unité d'analyse d'image pour l'analyse d'images microscopiques du dispositif de microscopie (2) optique,
dans lequel l'unité d'évaluation (29) est réalisée afin de prédéfinir pour la mesure de référence la distance entre l'unité d'imagerie (15) optique et le support d'objet (14) de telle manière qu'un résultat d'analyse d'image d'une première image microscopique d'un échantillon soit amené en utilisant une première méthode de microscopie en concordance avec un résultat d'analyse d'image d'une seconde image microscopique du même échantillon en utilisant une seconde méthode de microscopie, dans lequel au moins une des méthodes de microscopie utilise l'unité d'imagerie (15) optique.

12. Système de mise au point automatique (1) selon l'une quelconque des revendications précédentes, avec un entraînement (18) pour le réglage de la distance entre le système d'imagerie (15) optique et le support d'objet (14) et avec un dispositif de commande (30) pour la commande de l'entraînement (18) sur la base de la valeur de mise au point automatique.

13. Système de mise au point automatique (1) selon la revendication 12, dans lequel le dispositif de commande (30) est réalisé afin de prédéfinir une direction de réglage pour l'entraînement (18) à l'aide du signe de la valeur de mise au point automatique.

14. Système de mise au point automatique (1) selon la revendication 12 ou 13, dans lequel le dispositif de commande (30) est réalisé afin de prédéfinir une vitesse de réglage pour l'entraînement (18) à l'aide du montant de la valeur de mise au point automatique.

15. Système de mise au point automatique (1) selon la revendication 12 ou 13, dans lequel le dispositif de commande (30) est réalisé afin de prédéfinir une position absolue pour l'entraînement (18) à l'aide de la valeur de mise au point automatique.

16. Système de mise au point automatique (1) selon l'une quelconque des revendications précédentes, dans lequel l'unité d'évaluation (29) est réalisée afin de répéter de manière itérative la détermination de la fonction de distance pendant un réglage automatique de mise au point.

17. Système de mise au point automatique (1) selon l'une quelconque des revendications précédentes, dans lequel un appareil de stockage interagissant avec l'unité d'évaluation est prévu pour le stockage de positions x, y, z déterminées.

18. Procédé de réglage de mise au point pour un dispositif de mesure ou de microscopie optique, en particulier pour un microscope (2) ou un appareil de lecture de microdisques (32) qui peut être exécuté avec un système de mise au point automatique (1) selon au moins l'une des revendications précédentes,
dans lequel un faisceau de lumière de mise au point automatique (5) d'une source de lumière de mise au point automatique (3) est couplé dans un trajet de faisceau (13) du système de mesure (2) optique et est acheminé en direction d'un support d'objet (14),
dans lequel le faisceau de lumière de mise au point automatique couplé génère une tâche de lumière sur le support d'objet (14) lorsqu'il frappe le support d'objet (14) et est réfléchi au niveau d'au moins une surface limite réfléchissante du support d'objet (14),
dans lequel une part de lumière (23) du faisceau de lumière de mise au point automatique (5) réfléchi est découplée dans la direction de retour du trajet de faisceau (13) du système de mesure (2) optique et est acheminé en direction d'un détecteur d'intensité (4) à résolution spatiale dans au moins une direction, selon lequel un motif de lumière (28) réfléchi est généré au niveau du détecteur d'intensité (4),
dans lequel une valeur de mise au point automatique est déterminée à l'aide d'un déplacement calculé d'un profil d'intensité détecté par le détecteur d'intensité (4) sur la base du motif de lumière (28) réfléchi et d'un profil d'intensité de référence détecté dans le cadre d'une mesure de référence, pour lequel déplacement une mesure d'écart des deux profils d'intensité l'un par rapport à l'autre additionnée sur au moins une zone du détecteur d'intensité (4) est minimale, et un réglage de mise au point est exécuté au moyen de la valeur de mise au point automatique servant de signal de commande.

19. Système de mesure et de microscopie (31) optique comprenant un système de mise au point automatique (1) selon l'une quelconque des revendications 1 à 17, un microscope (2), un appareil de lecture de microdisques (32) ainsi qu'un dispositif de transport (44), dans lequel le dispositif de transport (44) est réalisé afin de déplacer alternativement un support d'objet (14) entre une première position de support d'objet (131) dans un trajet de faisceau (13) du microscope (2) et une seconde position de support d'objet (451) dans un trajet de faisceau (45) de l'appareil de lecture de microdisques (32).

20. Système de mise au point automatique (1) selon l'une quelconque des revendications 1 à 17, dans lequel l'unité d'évaluation (29) est réalisée afin d'exécuter une mesure de référence supplémentaire en amenant un motif test agencé sur le support d'objet (14) ou un système de support associé au support d'objet (14) dans le trajet de faisceau (13) et en exécutant une focalisation automatique sur le motif test en utilisant un calcul de mise au point automatique basé sur l'image, et ensuite en déterminant un nouveau motif de référence sur l'objet en utilisant un point de mise au point trouvé à l'aide du canal de mise au point automatique basé sur l'image, en particulier dans lequel une distance connue entre l'objet mis au point précédemment et le motif test est ajoutée au point de mise au point nouvellement trouvé.
